# EUROPEAN PATENT APPLICATION

(11) **EP 4 358 055 A1**
(43) Date of publication of application: **24.04.2024**
(21) Application number: 22855124.8
(22) Date of filing: 04.07.2022
(51) Int. Cl.: G08G 1/01

(54) **INTERACTION METHOD AND INTERACTION APPARATUS**

(30) Priority: 12.08.2021 CN 202110926578
(71) Applicant: Huawei Technologies Co., Ltd., Longgang Shenzhen, Guangdong 518129 (CN)
(72) Inventor: HUA, Wenjian, Shenzhen, Guangdong 518129 (CN); WANG, Jun, Shenzhen, Guangdong 518129 (CN)
(74) Representative: MERH-IP Matias Erny Reichl Hoffmann Patentanwälte PartG mbB
(86) International application number: PCT/CN2022/103633
(87) International publication number: WO 2023/016140

(57) **Abstract**

This application provides an interaction method and an interaction apparatus. This application relates to the field of intelligent transportation and intelligent vehicle technologies, and may be applied to a plurality of traffic scenarios, for example, a self-driving scenario. For example, the interaction method includes: A first roadside device obtains first feature information of a traffic participant; a second roadside device indicates second feature information and a global identifier to the first roadside device; and if the first feature information matches the second feature information, the first roadside device uses the global identifier to indicate the first feature information. For another example, the interaction method includes: a server configures a global identifier of a traffic participant based on feature information reported by a roadside device. The solution provided in this application improves trajectory continuity of a traffic participant in coverage areas of a plurality of roadside devices.

## Description

This application claims priority to Chinese Patent Application No. 202110926578.X, filed with the China National Intellectual Property Administration on August 12, 2021 and entitled "INTERACTION METHOD AND INTERACTION APPARATUS", which is incorporated herein by reference in its entirety.

### TECHNICAL FIELD

This application relates to the field of vehicle communication, and more specifically, to an interaction method and an interaction apparatus.

### BACKGROUND

A vehicle may obtain trajectory information near the vehicle by using a roadside device (for example, a roadside edge computing (roadside edge computing, REC) device or a roadside unit (roadside unit, RSU)). The trajectory information may include, for example, a position of a traffic participant around the vehicle. A type of the traffic participant may include, for example, a motor vehicle, a non-motor vehicle, a pedestrian, or a roadblock. A coverage area of the roadside device is relatively limited. To meet a driving requirement of the vehicle, the roadside device may obtain trajectory information outside the coverage area from another roadside device, and provide the obtained trajectory information to the vehicle.

To facilitate management of trajectory information of a traffic participant, the roadside device may configure a traffic identifier for a sensed traffic participant. A same traffic participant may have different traffic identifiers in coverage areas of different roadside devices. In a cross-roadside device interaction scenario, the vehicle may incorrectly consider a plurality of pieces of trajectory information of a same traffic participant as a plurality of pieces of trajectory information of a plurality of traffic participants.

### SUMMARY

This application provides an interaction method and an interaction apparatus, to establish a closer relationship between a traffic participant and trajectory information, so as to help process trajectory information for a traffic participant, for example, identify a moving trajectory of the traffic participant in coverage areas of a plurality of roadside devices.

According to a first aspect, an interaction method is provided, applied to a first roadside device and including: obtaining first feature information of a traffic participant, where the first feature information is used to identify the traffic participant; sending the first feature information and first local identification information to a server, where the first local identification information indicates a first local identifier of the traffic participant on the first roadside device; and receiving the first global identification information from the server, where the first global identification information indicates a global identifier corresponding to the first local identifier.

The roadside device may configure a local identifier for the traffic participant. The server configures a global identifier for the traffic participant based on a feature of the traffic participant. A correspondence is established between the local identifier and the global identifier, so that a same traffic participant may be indicated by a same global identifier in coverage areas of a plurality of roadside devices.

Feature information may include, for example, a part of trajectory information. The feature information may be obtained by using a sensor device corresponding to a roadside device.

With reference to the first aspect, in some implementations of the first aspect, the method further includes: sending first trajectory information, where the first trajectory information indicates a trajectory of the traffic participant and the global identifier.

The roadside device may send the trajectory information of the traffic participant to a vehicle or another roadside device. The global identifier may indicate a traffic participant corresponding to the trajectory information, so that the vehicle processes a continuous trajectory of a same traffic participant in a scenario in which the vehicle crosses a plurality of roadside devices. The vehicle may determine, based on the global identifier, whether a plurality of pieces of trajectory information delivered by the plurality of roadside devices in a period of time belong to the same traffic participant.

With reference to the first aspect, in some implementations of the first aspect, the first trajectory information further indicates the first local identifier.

In addition to indicating the traffic participant, the local identifier may further indicate the roadside device that captures the trajectory information. Therefore, more content may be indicated by using a relatively small amount of information, thereby improving interaction efficiency.

With reference to the first aspect, in some implementations of the first aspect, the global identifier includes one or more of the following: a road identifier, a road operator identifier, a server identifier, a sensing network identifier, and the first local identifier.

The road identifier, the road operator identifier, the server identifier, the sensing network identifier, and the like may correspond to coverage areas of a plurality of roadside devices, so that a relationship is established between the global identifier and the coverage areas of the plurality of roadside devices. The local identifier of the traffic participant may reflect a source of the global identifier.

With reference to the first aspect, in some implementations of the first aspect, the first local identifier includes one or more of the following: a sensing device identifier, a roadside computing unit identifier, an identifier of a pole position in which a roadside device is deployed, and a traffic participant identifier.

The sensing device identifier, the roadside computing unit identifier, the identifier of a pole position in which a roadside device is deployed, the traffic participant identifier, and the like may correspond to a coverage area of one roadside device or coverage areas of a few road devices, so that a relationship is established between the local identifier and the coverage area of one roadside device or the coverage areas of a few road devices.

With reference to the first aspect, in some implementations of the first aspect, the method further includes: sending the first feature information and second global identification information to a second roadside device, where the second global identification information indicates the global identifier, and the second roadside device is located downstream in a moving direction of the traffic participant relative to the first roadside device.

The roadside device may send the global identifier to a downstream roadside device, so that the downstream roadside device can integrate the global identifier of the traffic participant from the upstream roadside device. In a level-by-level transfer manner, more roadside devices may use a same global identifier to indicate a same traffic participant. With reference to a solution in which the server manages the global identifier, a manner in which the roadside device obtains the global identifier may be relatively flexible.

According to a second aspect, an interaction method is provided, applied to a server and including: receiving first feature information and first local identification information of a traffic participant from a first roadside device, where the first feature information is used to identify the traffic participant, and the first local identification information indicates a first local identifier of the traffic participant on the first roadside device; and sending first global identification information to the first roadside device based on the first feature information, where the first global identification information indicates a global identifier corresponding to the first local identifier.

The roadside device may configure a local identifier for the traffic participant based on the traffic participant. The server configures a global identifier for the traffic participant based on a feature of the traffic participant. A correspondence is established between the local identifier and the global identifier, so that a same traffic participant may be indicated by a same global identifier in coverage areas of a plurality of roadside devices.

With reference to the second aspect, in some implementations of the second aspect, the global identifier includes one or more of the following: a road identifier, a road operator identifier, a server identifier, a sensing network identifier, and the first local identifier.

With reference to the second aspect, in some implementations of the second aspect, the first local identifier includes one or more of the following: a sensing device identifier, a roadside computing unit identifier, an identifier of a pole position in which a roadside device is deployed, and a traffic participant identifier.

With reference to the second aspect, in some implementations of the second aspect, the method further includes: storing the correspondence between the global identifier and the first local identifier.

The server may record the correspondence between the local identifier and the global identifier. This reduces a data storage amount of the roadside device. For example, the roadside device may not record the correspondence between the local identifier and the global identifier, but directly send trajectory information of the traffic participant by using the global identifier.

With reference to the second aspect, in some implementations of the second aspect, the method further includes: receiving second feature information and second local identification information of the traffic participant from a second roadside device, where the second feature information is used to identify the traffic participant, and the second local identification information indicates a second local identifier of the traffic participant on the second roadside device; and sending second global identification information to the second roadside device based on the second feature information, where the second global identification information indicates the global identifier, and the global identifier corresponds to the second local identifier.

By matching the first feature information with the second feature information, the server indicates a same global identifier to the first roadside device and the second roadside device for a same traffic participant. Therefore, a same traffic participant may be relatively coherent in coverage areas of a plurality of roadside devices.

In an example, the sending second global identification information to the second roadside device based on the second feature information includes: determining, based on the first feature information and the second feature information, that the first feature information and the second feature information indicate a same traffic participant; and sending the second global identification information to the second roadside device.

Optionally, the first feature information includes a first information entry, and the second feature information includes a second information entry. The matching between the first feature information and the second feature information may meet any one of the following: the first information entry is the same as or corresponds to the second information entry. For example, a difference between the first information entry and the second information entry is less than a preset threshold. For another example, a degree of matching between the first information entry and the second information entry is higher than a preset matching threshold.

Optionally, the matching between the first feature information and the second feature information may further meet that: priorities of information entry types of the first information entry and the second information entry are higher than a preset priority.

Optionally, the matching between the first feature information and the second feature information may further meet the following condition: M information entries of the first information entry match M information entries of the second information entry, where M is greater than a preset entry quantity.

Optionally, the server may further send the feature information and global identification information of the traffic participant to another server, where the global identification information indicates a global identifier of the traffic participant.

According to a third aspect, an interaction method is provided, applied to a first roadside device and including: obtaining first feature information of a first traffic participant, where the first feature information is used to identify the first traffic participant; obtaining trajectory information of the first traffic participant; receiving second feature information and first global identification information of a second traffic participant from a second roadside device, where the second feature information is used to identify the second traffic participant, the first global identification information indicates a global identifier of the second traffic participant, and the second roadside device is located upstream in a moving direction of the first traffic participant relative to the first roadside device; comparing the first feature information with the second feature information, to determine that the first traffic participant and the second traffic participant are a same traffic participant; and sending a trajectory transfer message, where the trajectory transfer message includes the trajectory information and the global identifier.

The roadside device may send the global identifier to a downstream roadside device, so that the downstream roadside device can integrate the global identifier of the traffic participant from the upstream roadside device. In a level-by-level transfer manner, more roadside devices may use a same global identifier to indicate a same traffic participant.

That the first traffic participant and the second traffic participant are a same traffic participant may mean that the first feature information matches the second feature information.

Optionally, the first feature information includes a first information entry, and the second feature information includes a second information entry. The matching between the first feature information and the second feature information may meet any one of the following: the first information entry is the same as or corresponds to the second information entry. For example, a difference between the first information entry and the second information entry is less than a preset threshold. For another example, a degree of matching between the first information entry and the second information entry is higher than a preset matching threshold.

Optionally, the matching between the first feature information and the second feature information may further meet that: priorities of information entry types of the first information entry and the second information entry are higher than a preset priority.

Optionally, the matching between the first feature information and the second feature information may further meet the following condition: M information entries of the first information entry match M information entries of the second information entry, where M is greater than a preset entry quantity.

With reference to the third aspect, in some implementations of the third aspect, when the first roadside device is located on a road on which the moving trajectory of the first traffic participant is located, the method further includes: sending the feature information and second global identification information of the first traffic participant to a third roadside device, where the second global identification information indicates the global identifier.

Because the first roadside device is relatively strongly associated with the moving trajectory of the traffic participant, there is a relatively high probability that the traffic participant appears in a coverage area of a surrounding roadside device of the first roadside device. Therefore, the first roadside device may indicate the global identifier of the traffic participant to the surrounding roadside device. Whether to transmit the global identifier of the traffic participant is selected based on the moving trajectory of the traffic participant. This improves a possibility that a plurality of roadside devices use a same global identifier to indicate a same traffic participant.

With reference to the third aspect, in some implementations of the third aspect, the third roadside device is located downstream in a moving direction of the first traffic participant relative to the first roadside device.

A possibility that the traffic participant subsequently appears in a coverage area of a downstream roadside device of the first roadside device may be higher than a possibility that the traffic participant subsequently appears in a coverage area of an upstream roadside device of the first roadside device. Therefore, the first roadside device selects to indicate the global identifier of the traffic participant to the downstream roadside device, and does not indicate the global identifier of the traffic participant to the upstream roadside device. This reduces unnecessary signaling overheads.

With reference to the third aspect, in some implementations of the third aspect, the first roadside device is located in a coverage area of a first server, the third roadside device is located in a coverage area of a second server, the first server is different from the second server, and the method further includes: receiving an address and topology information of the third roadside device from the first server; and the sending the feature information and second global identification information of the first traffic participant to a third roadside device includes: sending the feature information and the second global identification information of the first traffic participant to the third roadside device based on the address and the topology information of the third roadside device.

The first roadside device may obtain the address and the topology information of the third roadside device from the server, so that the first roadside device may send a message to the third roadside device across servers, thereby reducing a signaling transmission delay.

With reference to the third aspect, in some implementations of the third aspect, when the first roadside device is not located on a road on which the moving trajectory of the first traffic participant is located, the method further includes: skipping sending the feature information of the first traffic participant and the global identification information indicating the global identifier to any roadside device.

Because the first roadside device is relatively weakly associated with the moving trajectory of the traffic participant, there is a relatively low probability that the traffic participant appears in the coverage areas of a downstream roadside device and an upstream roadside device of the first roadside device. Therefore, the first roadside device may not indicate a global identifier of the traffic participant to the downstream roadside device and the upstream roadside device, thereby reducing unnecessary signaling overheads.

According to a fourth aspect, an interaction method is provided, applied to a second roadside device and including: obtaining second feature information and first global identification information of a second traffic participant, where the first global identification information indicates a global identifier of the second traffic participant; obtaining trajectory information of the second traffic participant; sending the second feature information and the first global identification information to a first roadside device, where the second roadside device is located upstream in a moving direction of the second traffic participant relative to the first roadside device; and sending a trajectory transfer message, where the trajectory transfer message includes the trajectory information and the global identifier.

According to a fifth aspect, an interaction method is provided, applied to a roadside device and including: a roadside device obtains feature information and trajectory information of a traffic participant; the roadside device receives global identification information corresponding to the feature information, where the global identification information indicates a global identifier corresponding to the traffic participant; and the roadside device sends a trajectory transfer message, where the trajectory transfer message includes the trajectory information and the global identifier.

The feature information of the traffic participant is associated with the global identifier, so that a plurality of roadside devices use a same identifier to indicate a same traffic participant, and trajectories of the same traffic participant in the coverage areas of the plurality of roadside devices can be relatively coherent.

According to a sixth aspect, an interaction apparatus is provided, applied to a roadside device, and includes: a processing unit, configured to obtain first feature information of a traffic participant, where the first feature information is used to identify the traffic participant; a sending unit, configured to send the first feature information and first local identification information to a server, where the first local identification information indicates a first local identifier of the traffic participant on the first roadside device; and a receiving unit, configured to receive the first global identification information from the server, where the first global identification information indicates a global identifier corresponding to the first local identifier.

With reference to the sixth aspect, in some implementations of the sixth aspect, the sending unit is further configured to send first trajectory information, where the first trajectory information indicates a trajectory of the traffic participant and the global identifier.

With reference to the sixth aspect, in some implementations of the sixth aspect, the first trajectory information further indicates the first local identifier.

With reference to the sixth aspect, in some implementations of the sixth aspect, the global identifier includes one or more of the following: a road identifier, a road operator identifier, a server identifier, a sensing network identifier, and the first local identifier.

With reference to the sixth aspect, in some implementations of the sixth aspect, the first local identifier includes one or more of the following: a sensing device identifier, a roadside computing unit identifier, an identifier of a pole position in which a roadside device is deployed, and a traffic participant identifier.

With reference to the sixth aspect, in some implementations of the sixth aspect, the sending unit is further configured to send the first feature information and second global identification information to a second roadside device, where the second global identification information indicates the global identifier, and the second roadside device is located downstream in a moving direction of the traffic participant relative to the roadside device.

According to a seventh aspect, an interaction apparatus is provided, applied to a server and including: a receiving unit, configured to receive first feature information and first local identification information of a traffic participant from a first roadside device, where the first feature information is used to identify the traffic participant, and the first local identification information indicates a first local identifier of the traffic participant on the first roadside device; and a sending unit, configured to send first global identification information to the first roadside device based on the first feature information, where the first global identification information indicates a global identifier corresponding to the first local identifier.

With reference to the seventh aspect, in some implementations of the seventh aspect, the server further includes: a storage unit, configured to store a correspondence between the global identifier and the first local identifier.

With reference to the seventh aspect, in some implementations of the seventh aspect, the receiving unit is further configured to receive second feature information and second local identification information of the traffic participant from a second roadside device, where the second feature information is used to identify the traffic participant, and the second local identification information indicates a second local identifier of the traffic participant on the second roadside device; and the sending unit is further configured to send second global identification information to the second roadside device based on the second feature information, where the second global identification information indicates the global identifier, and the global identifier corresponds to the second local identifier.

According to an eighth aspect, an interaction apparatus is provided, applied to a roadside device and including: a processing unit, configured to obtain first feature information of a first traffic participant, where the first feature information is used to identify the first traffic participant, and the processing unit is further configured to obtain trajectory information of the first traffic participant; a receiving unit, configured to receive second feature information and first global identification information of a second traffic participant from a second roadside device, where the second feature information is used to identify the second traffic participant, the first global identification information indicates a global identifier of the second traffic participant, and the second roadside device is located upstream in a moving direction of the first traffic participant relative to the roadside device, and the processing unit is further configured to compare the first feature information with the second feature information, to determine that the first traffic participant and the second traffic participant are a same traffic participant; and a sending unit, configured to send a trajectory transfer message, where the trajectory transfer message includes the trajectory information and the global identifier.

With reference to the eighth aspect, in some implementations of the eighth aspect, the sending unit is further configured to: when the roadside device is located on a road on which the moving trajectory of the first traffic participant is located, send the feature information and second global identification information of the first traffic participant to a third roadside device, where the second global identification information indicates the global identifier.

With reference to the eighth aspect, in some implementations of the eighth aspect, the third roadside device is located downstream in a moving direction of the first traffic participant relative to the roadside device.

With reference to the eighth aspect, in some implementations of the eighth aspect, the roadside device is located in a coverage area of a first server, the third roadside device is located in a coverage area of a second server, and the first server is different from the second server; the receiving unit is further configured to receive an address and topology information of the third roadside device from the first server; and the sending unit is specifically configured to send the feature information and the second global identification information of the first traffic participant to the third roadside device based on the address and the topology information of the third roadside device.

With reference to the eighth aspect, in some implementations of the eighth aspect, the sending unit is further configured to: when the roadside device is not located on a road on which the moving trajectory of the first traffic participant is located, skip sending the feature information of the first traffic participant and the information indicating the global identifier to any roadside device.

According to a ninth aspect, an interaction apparatus is provided, including a processor and a memory, where the memory is configured to store a computer program, and the processor is configured to execute the computer program, so that the apparatus performs the interaction method according to any one of the first aspect to the fifth aspect or the possible implementations of the first aspect to the fifth aspect.

According to a tenth aspect, a computer program product is provided, and includes computer instructions, and when the computer instructions are run on a processor, the interaction method according to any one of the first aspect to the fifth aspect or the possible implementations of the first aspect to the fifth aspect is implemented.

According to an eleventh aspect, a computer-readable storage medium is provided, where the computer-readable storage medium stores computer instructions, and when the computer instructions are run on a processor, the interaction method according to any one of the first aspect to the fifth aspect or the possible implementations of the first aspect to the fifth aspect is implemented.

### BRIEF DESCRIPTION OF DRAWINGS

FIG. 1 is a schematic diagram of a structure of a Vehicle to Everything interaction scenario according to an embodiment of this application;
FIG. 2 is a schematic diagram of a structure of another Vehicle to Everything interaction scenario according to an embodiment of this application;
FIG. 3 is a diagram of an architecture of a Vehicle to Everything interaction system according to an embodiment of this application;
FIG. 4 is a flowchart of an interaction method according to an embodiment of this application;
FIG. 5 is a schematic diagram of a structure of a Vehicle to Everything interaction scenario according to an embodiment of this application;
FIG. 6 is a flowchart of another interaction method according to an embodiment of this application;
FIG. 7 is a diagram of an architecture of a Vehicle to Everything interaction system according to an embodiment of this application;
FIG. 8 is a schematic diagram of a structure of an interaction apparatus according to an embodiment of this application; and
FIG. 9 is a schematic diagram of a structure of an interaction apparatus according to an embodiment of this application.

### DESCRIPTION OF EMBODIMENTS

The following describes technical solutions of this application with reference to accompanying drawings.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression thereof refers to any combination of these items, including a singular item or any combination of plural items. For example, at least one of a, b, or c may indicate: a, b, c, a-b, a-c, b-c, or a-b-c, where a, b, and c may indicate a singular or plural form. In addition, in embodiments of this application, the words such as "first" and "second" do not limit a quantity or an execution sequence, but are text descriptions used for ease of description and differentiation, to represent different subjects or objects. In addition, in embodiments of this application, the words such as "301", "402", and "503" are merely used as identifiers for ease of description, and do not limit an execution sequence of steps.

V2X is a key technology of an intelligent transportation system. V2X communication may include communication manners such as vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication. A series of trajectory information such as a real-time road condition, road information, and pedestrian information may be obtained through the V2X communication, so as to improve driving safety, reduce congestion, improve traffic efficiency, provide in-vehicle entertainment information, and the like.

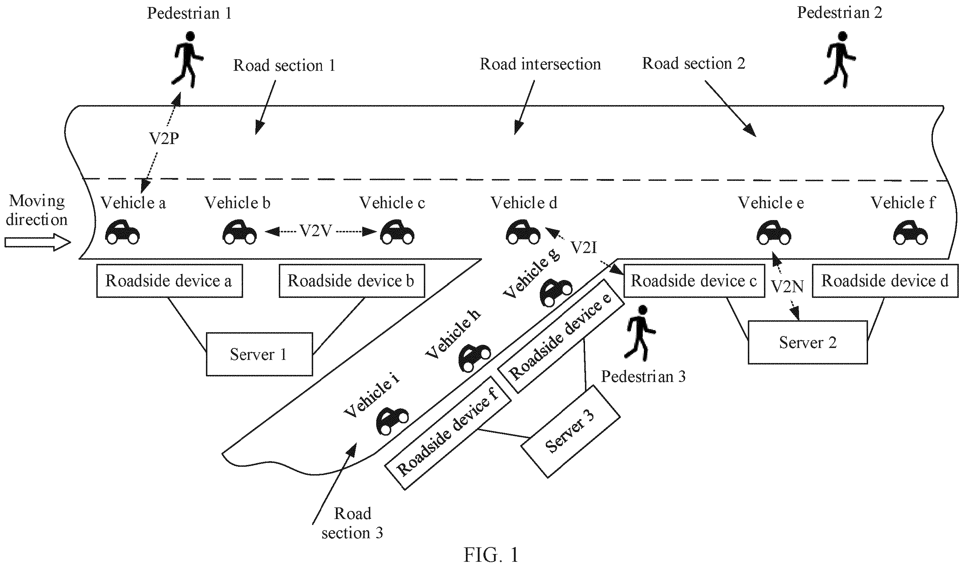

The following describes, by using an example shown in FIG. 1, a possible Vehicle to Everything (vehicle to everything, V2X) interaction scenario according to an embodiment of this application.

FIG. 1 shows several vehicles (including a vehicle a to a vehicle i), several roadside devices (including a roadside device a to a roadside device f), several servers (including a server 1 to a server 3), and several pedestrians (including a pedestrian 1 to a pedestrian 3). It should be understood that FIG. 1 is only a schematic diagram of a Vehicle to Everything interaction scenario according to an embodiment of this application. The embodiments of this application may be applied to a Vehicle to Everything interaction scenario including more or fewer vehicles, or may be applied to a Vehicle to Everything interaction scenario including more or fewer roadside devices, or may be applied to a Vehicle to Everything interaction scenario including more or fewer servers, or may be applied to a Vehicle to Everything interaction scenario including more or fewer pedestrians. This is not limited in this application.

A vehicle may travel on a road, for example, a road section 1, a road section 2, and a road section 3 shown in FIG. 1. The road section 1, the road section 2, and the road section 3 may meet each other at a road intersection. In a possible example, a vehicle on the road section 1 may travel into the road section 2 or the road section 3 through the road intersection. In another possible example, a vehicle on the road section 2 may travel into the road section 1 or the road section 3 through the road intersection. In still another possible example, a vehicle on the road section 3 travels into the road section 1 or the road section 2 through the road intersection.

In a process in which the vehicle travels on the road, the vehicle may interact with a Vehicle to Everything communication device.

The Vehicle to Everything communication device may include a roadside device. Communication between the vehicle and the roadside device may be V2I communication. The roadside device may refer to a roadside infrastructure. For example, the roadside device may include a roadside edge computing (roadside edge computing, REC) device and a roadside unit (roadside unit, RSU), and may further include a roadside device having roadside edge computing (roadside edge computing, REC) device and a roadside unit (roadside unit, RSU). For example, the REC may obtain various types of service information such as road condition information, parking fee information, and in-vehicle entertainment information, and provide the service information to the vehicle. For another example, the RSU may provide data network access for the vehicle.

The roadside device may be disposed on a roadside. The roadside device may obtain feature information and trajectory information of a traffic participant in a coverage area. A coverage area of the roadside device is relatively limited. A plurality of roadside devices may be disposed on a same road section. Each roadside device may monitor one area of the road section, and the plurality of roadside devices may monitor a plurality of areas of the road section.

In an example shown in FIG. 1, a roadside device a and a roadside device b may be disposed on the road section 1; and the roadside device a and the roadside device b may obtain trajectory information of a traffic participant on the road section 1. For example, the roadside device a may obtain trajectory information of the vehicle a; and the vehicle b, and the pedestrian 1, and the roadside device b may obtain trajectory information of the vehicle b and the vehicle c.

The roadside device c and the roadside device d may be disposed on the road section 2; and the roadside device c and the roadside device d may obtain trajectory information of a traffic participant on the road section 2. For example, the roadside device c may obtain trajectory information of the vehicle e and the pedestrian 3; and the roadside device d may obtain trajectory information of the vehicle e, the vehicle f, and the pedestrian 2.

The roadside device e and the roadside device f may be disposed on the road section 3; and the roadside device e and the roadside device f may obtain trajectory information of a traffic participant on the road section 3. For example, the roadside device e may obtain trajectory information of the vehicle g and the pedestrian 3; and the roadside device d may obtain trajectory information of the vehicle h and the vehicle i.

The roadside device b may be a device that is on either side of the road section 1 and that is close to the road intersection. Optionally, the roadside device b may further obtain trajectory information of a traffic participant in an area that is of the road section 1 and that is close to the road intersection. Optionally, the roadside device b may further obtain trajectory information of a traffic participant at the road intersection. For example, the roadside device b may obtain trajectory information of the vehicle d.

The roadside device c may be devices on two sides of the road section 2 that are close to a road intersection. Optionally, the roadside device c may further obtain trajectory information of a traffic participant in an area that is of the road section 2 and that is close to the road intersection. Optionally, the roadside device c may further obtain trajectory information of a traffic participant at the road intersection. For example, the roadside device c may obtain trajectory information of the vehicle d.

The roadside device e may be devices on two sides of the road section 3 that are close to the road intersection. The roadside device e may further obtain trajectory information of a traffic participant in an area that is of the road section 3 and that is close to the road intersection. Optionally, the roadside device e may further obtain trajectory information of a traffic participant at the road intersection. For example, the roadside device e may obtain trajectory information of the vehicle d.

It should be understood that the foregoing descriptions are merely an example for describing the scenario shown in FIG. 1. In another possible example, the roadside device may obtain more or fewer traffic participants. This is not limited in this application.

The Vehicle to Everything communication device may include a vehicle. Communication between vehicles may be V2V communication. For example, the vehicle may broadcast, to a surrounding device, information such as a vehicle speed, a traveling direction, a specific position, and whether emergency braking is performed. After obtaining such information, a driver of the surrounding vehicle can better sense an out-of-sight traffic condition, so as to predict and avoid a dangerous situation. Vehicle communication may be implemented by any one of the following: a vehicle, an in-vehicle infotainment system, an in-vehicle terminal, an on-board computer (On-board computer, or On-board PC), an in-vehicle chip, an in-vehicle device, and the like.

In a Vehicle to Everything interaction scenario, the V2V communication may be performed between vehicles that are close to each other. With reference to the example shown in FIG. 1, the V2V communication may be performed between two vehicles in the vehicle a to the vehicle i in FIG. 1. As shown in FIG. 1, communication between the vehicle b and the vehicle c may be the V2V communication.

The Vehicle to Everything communication device may include a server. Communication between the vehicle and the server may be V2N communication. For example, the vehicle may report verification information of a vehicle to a server, and the server may perform validity verification on the vehicle based on the verification information of the vehicle. The vehicle may directly communicate with the server, or may communicate with the server by using, for example, an access network device (such as a base station) or a core network device.

The server may be responsible for a service related to vehicle-road collaboration in a coverage area of the server. The server may manage a roadside device located in the coverage area of the server. For example, the server may manage an address and topology information of the roadside device. The roadside device located in the coverage area of the server may be mapped to the server. The server may interact with the roadside device located in the coverage area of the server. Optionally, the server may manage all roadside devices on a road section.

In the example shown in FIG. 1, the roadside device a and the roadside device b may be located in a coverage area of the server 1, the roadside device c and the roadside device d may be located in a coverage area of the server 2, and the roadside device e and the roadside device f may be located in a coverage area of the server 3.

The server may subscribe to information from another server to obtain information in a coverage area of the another server. The information may include, for example, feature information, trajectory information, topology information of a roadside device, an address of the roadside device, and verification information of a vehicle that are obtained by the roadside device.

With reference to FIG. 1, in an example, the server 1 and the server 2 may subscribe to topology information and addresses of roadside devices from each other. For example, the server 1 may subscribe to topology information and addresses of the roadside device c and the roadside device d from the server 2, and the server 2 may subscribe to topology information and addresses of the roadside device a and the roadside device b from the server 1.

The Vehicle to Everything communication device may include a terminal device. The terminal device may be a terminal device carried by a user. Communication between the vehicle and the terminal device may be V2P communication. The terminal device may be, for example, a UE (User Equipment, user equipment), an MS (Mobile Station, mobile station), a mobile terminal (Mobile Terminal), or an electronic label (V2X license plate, a license plate having a V2X communication function). Optionally, the terminal device may be a wearable device, a mobile phone, a tablet computer, a PDA (Personal Digital Assistant, personal digital assistant), a POS (Point of Sales, point of sales), an on-board computer, or the like. With reference to FIG. 1, in an example, the vehicle a may perform V2P communication with the pedestrian 1.

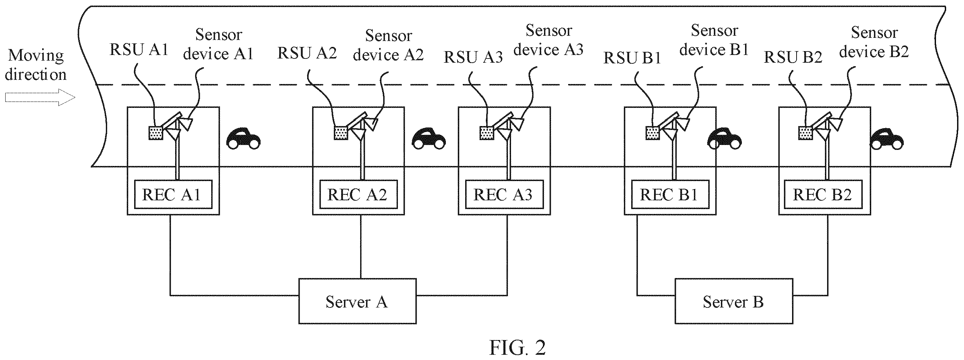

The following describes, by using an example shown in FIG. 2, another possible Vehicle to Everything interaction scenario according to an embodiment of this application. A road shown in FIG. 2 may correspond to, for example, one or more of the road section 1, the road section 2, and the road section 3 shown in FIG. 1.

One or more RECs may be disposed on the roadside, for example, an REC A1, an REC A2, an REC A3, an REC B1 and an REC B2 shown in FIG. 2. The REC may have a computing capability. Because the REC is disposed on a roadside, the REC can obtain traffic-related information on the road in a relatively timely manner, and quickly respond to the obtained information.

One or more sensor devices may be further disposed on the roadside, for example, a sensor device A1, a sensor device A2, a sensor device A3, a sensor device B1, and a sensor device B2. The sensor device may be configured to obtain trajectory information that occurs on the road in real time. The sensor device may be, for example, an apparatus such as a camera, a radar, or a camera. The sensor device and the REC may communicate with each other. The trajectory information captured by the sensor device may be sent to the REC in real time. For example, as shown in FIG. 2, the REC A2 is used as an example. The REC A2 may obtain trajectory information captured by the sensor device A2 from the sensor device A2. For related descriptions of another REC provided in this embodiment of this application, refer to the descriptions of the REC A2 shown in FIG. 2. The sensor device may be further configured to obtain feature information of a traffic participant.

Optionally, one REC may obtain feature information and trajectory information on a road by using one or more sensor devices, that is, one REC may correspond to one or more sensor devices. In this case, an overall sensing range of one or more sensor devices may correspond to a coverage area of the REC. The trajectory information captured by one or more sensor devices may indicate trajectory information in the coverage area of the REC. The feature information captured by one or more sensor devices may indicate a feature of the traffic participant.

Optionally, one sensor device may send the captured feature information and trajectory information to one or more RECs, that is, one sensor device may correspond to one or more RECs.

The REC may communicate with another Vehicle to Everything communication device (for example, a vehicle, a server, or a roadside device) by using one or more RSUs. In this case, an overall communication range of one or more RSUs may correspond to a communication range of the REC. The one or more RSUs may correspond to the REC. For example, as shown in FIG. 2, the REC A1 is used as an example. The REC A1 may interact with a vehicle, a server A, an RSU A2, an RSU A3, and the like by using the RSU A1. The RSU A1 may correspond to the REC A1. The REC B1 is used as an example. The REC B1 may interact with a vehicle, a server B, an RSU B2, and the like by using the RSU B1. The REC B1 may correspond to the REC B1. For related descriptions of another REC provided in this embodiment of this application, refer to the descriptions of the REC A1 or the REC B1 shown in FIG. 2.

Interaction between RSU A1 and RSU A2 is used as an example. The RSU A1 is the RSU corresponding to the REC A1. The RSU A2 is the RSU corresponding to the REC A2. Therefore, the REC A1 may obtain information from the REC A2 through interaction between the RSU A1 and the RSU A2; or the REC A1 may send information to the REC A2 through interaction between the RSU A1 and the RSU A2. For related descriptions of interaction through another RSU provided in this embodiment of this application, refer to the descriptions of the RSU A1 and the RSU A2 shown in FIG. 2.

In an example, both the REC and the RSU may be roadside devices. For example, the REC A1 is used as an example. The REC A1 may correspond to any one of the roadside device a to the roadside device f shown in FIG. 1. For another example, the RSU A1 is used as an example. The RSU A1 may correspond to any one of the roadside device a to the roadside device f shown in FIG. 1. In another example, the roadside device may include an REC and an RSU, or include a module or a unit configured to implement functions of the REC and the RSU. For example, the REC A1 and the RSU A1 are used as an example. A device having the REC A1 and the RSU A1 may correspond to any one of the roadside device a to the roadside device f shown in FIG. 1. For related descriptions of other relationships between the RSU, the REC, and the roadside device provided in this embodiment of this application, refer to the descriptions of the REC A1 and the RSU A1 shown in FIG. 2.

The server may manage a roadside device in a coverage area. With reference to the example shown in FIG. 2, the server A is used as an example, and the server A may manage, for example, the REC A1, the REC A2, and the REC A3, or may manage the RSU A1, the RSU A2, and the RSU A3, or may manage a roadside device (or system) including the REC A1 and the RSU A1, a roadside device (or system) including the REC A2 and the RSU A2, and a roadside device (or system) including the REC A3 and the RSU A3. The server A shown in FIG. 2 may correspond to, for example, any one of the server 1, the server 2, and the server 3 shown in FIG. 1. For related descriptions of another server provided in this embodiment of this application, refer to the descriptions of the server A shown in FIG. 2.

Optionally, the RSU or the REC may further interact with each other across servers. The following uses the interaction between the REC A1 and the REC B1 as an example for description. For related descriptions of cross-server interaction of another REC provided in this embodiment of this application, refer to the descriptions of the REC A1 and the REC B1 shown in FIG. 2.

For example, the REC A1 may obtain information from the REC B1 through interaction between RSU A1 and the server A, interaction between the server A and the server B, and interaction between the server B and the RSU B1; or the REC A1 may send information to the REC B1 through interaction between the RSU A1 and the server A, interaction between the server A and the server B, and interaction between the server B and the RSU B1.

For another example, the server A may subscribe to an address and topology information of the RSU B1 from the server B. The server B may subscribe to an address and topology information of the RSU A1 from the server A. The REC A1 may send information to the REC B1 according to the address and the topology information of the RSU B1 through interaction between the RSU A1 and the RSU B1. The REC B1 may send information to the REC A1 according to the address and the topology information of the RSU A1 through interaction between the RSU A1 and the RSU B1.

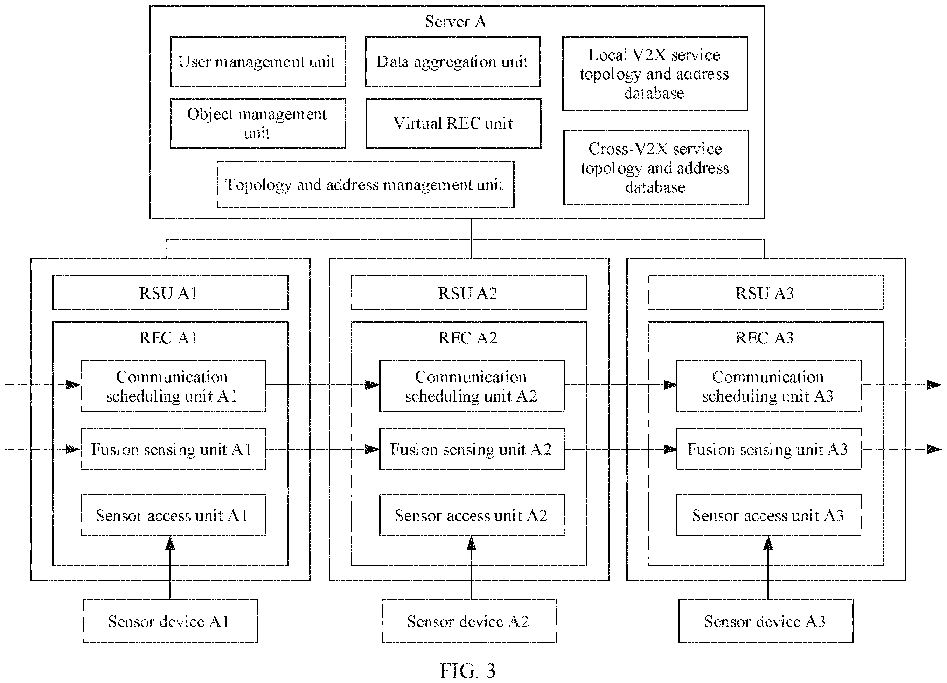

FIG. 3 is a diagram of an architecture of a Vehicle to Everything interaction system according to an embodiment of this application.

The system may include one or more servers (the server A shown in FIG. 3), one or more RSUs (the RSU A1, the RSU A2, and the RSU A3 shown in FIG. 3), one or more RECs (the REC A1, the REC A2, and the REC A3 shown in FIG. 3), and one or more sensor devices (the sensor device A1, the sensor device A2, and the sensor device A3 shown in FIG. 3). The server shown in FIG. 3 may correspond to, for example, any one of the servers 1 to 3 shown in FIG. 1, or may correspond to any one of the servers A and B shown in FIG. 2. The RSU shown in FIG. 3 may correspond to, for example, any one of the roadside devices a to f shown in FIG. 1, or may correspond to any one of the RSUs A1 to A3 and the RSUs B1 and B2 shown in FIG. 2. For example, the REC shown in FIG. 3 may correspond to any one of the roadside devices a to f shown in FIG. 1, or may correspond to any one of the RSUs A1 to A3 and the RSUs B1 and B2 shown in FIG. 2. The sensor device shown in FIG. 3 may correspond to, for example, any one of the sensor devices A1 to A3 and the sensor devices B1 and B2 shown in FIG. 2.

The server A shown in FIG. 3 is used as an example to describe a system architecture of a server according to an embodiment of this application. For related descriptions of another server provided in this embodiment of this application, refer to the descriptions of the server A shown in FIG. 3.

The server A may include, for example, a user management unit, an obj ect management unit, a data aggregation unit, a virtual REC unit, a topology and address management unit, and a database. In another possible example, the server A may include more or fewer units, or may implement more or fewer functions.

The user management unit may be configured to provide services such as creating an account, deregistering an account, and verifying a vehicle qualification for a vehicle. The account may be, for example, an electronic account having a consumption function. The vehicle qualification verification may be used to verify validity of performing Vehicle to Everything communication by the vehicle. For example, the user management unit may receive a vehicle verification message reported by a roadside device, and send a vehicle verification result to the roadside device.

The object management unit may be, for example, configured to manage (for example, allocate, inherit, delete, or update) information (for example, an identifier, feature information, or trajectory information) about a traffic participant. The feature information, the trajectory information, and the like of the traffic participant may be obtained from, for example, a roadside device.

The data aggregation unit may obtain information from a Vehicle to Everything communication device (such as a roadside device, a vehicle, or a terminal device). For example, the data aggregation unit may be configured to obtain and aggregate data from a plurality of RECs, and process the data from the plurality of RECs, so as to implement a global management function.

The virtual REC unit may be configured to implement mapping of the REC on the V2X service. The virtual REC unit may be configured to manage a roadside device located in a coverage area of the server A.

The topology and address management unit may be, for example, configured to maintain an address and topology information of the roadside device. For example, the topology and address management unit may manage (for example, add, update, or delete) an address and topology information of a roadside device managed by the server A. For another example, the topology and address management unit may subscribe to an address and topology information of a roadside device managed by another server.

The database may be configured to store data, for example, account information and information obtained by the data aggregation unit. The database may include, for example, a local V2X service topology and address database, and a cross-V2X service topology and address database. The local V2X service topology and address database may be used to store an address and topology information of a local roadside device. The cross-V2X service topology and address database may be used to store an address and topology information that is of a roadside device and that is subscribed from another server.

In the example shown in FIG. 3, the REC A1, the REC A2, and the REC A3 may be located in the coverage area of the server A and managed by server A. The following uses the REC A2 as an example to describe a system architecture of an REC according to an embodiment of this application. For related descriptions of another REC provided in this embodiment of this application, refer to the descriptions of the REC A2 shown in FIG. 3.

The REC A2 may include a communication scheduling unit A2, a sensor access unit A2, and a fusion sensing unit A2. In other possible examples, the REC A2 may include more or fewer units, or may implement more or fewer functions. In a possible example, the REC A2 and the RSU A2 may form a roadside device managed by the server A. In another possible example, the REC A2 and the RSU A2 may be independent of each other.

A communication scheduling unit A2 of the REC A2 may be configured to interact with a vehicle, a terminal device, another roadside device (for example, the RSU A1 or the RSU A3 in FIG. 3), a server (for example, the server A in FIG. 3), and the like by using the RSU A2, so that the REC A2 may interact with a Vehicle to Everything communication device located in a communication range of the REC A2. In another example, the communication scheduling unit A2 may be implemented by the RSU A2. For example, the communication scheduling unit A2 may be configured to implement functions such as vehicle verification, vehicle activation, vehicle deactivation, REC switching, subscribing to feature information and trajectory information from another REC, and subscribing to feature information and trajectory information by another REC.

A sensor access unit A2 of the REC A2 may be configured to obtain feature information and trajectory information captured by a sensor device (such as the sensor device A2). The REC A2 may have, for example, a sensing interface connected to the sensor device A2. The sensor access unit A2 may receive the feature information and the trajectory information from the sensor device A2 through the sensing interface. An overall coverage area of one or more sensor devices connected to the sensor access unit A2 of the REC A2 may correspond to a coverage area of the REC A2. The sensor access unit A2 may be, for example, configured to implement functions such as vehicle verification, vehicle activation, vehicle deactivation, REC switching, subscribing to feature information and trajectory information from another REC, and subscribing to feature information and trajectory information by another REC.

The following uses the sensor device A2 shown in FIG. 3 as an example to describe application of the sensor device in an embodiment of this application. For related descriptions of another sensor device provided in this embodiment of this application, refer to the descriptions of the sensor device A2 shown in FIG. 3. In an example, the sensor device A2 may be a device such as a camera or a radar. For example, the camera may capture related information of a motor vehicle, a non-motor vehicle, a pedestrian, or the like by photographing an image or a video. The related information may include, for example, one or more of the following: a color, a shape, a size, a license plate, and a model of the motor vehicle or the non-motor vehicle, and pedestrian dressing, a pedestrian body feature, and pedestrian identity information. For another example, the radar may determine a position, a moving speed, a moving direction, and the like of a motor vehicle, a non-motor vehicle, a pedestrian, or the like.

The fusion sensing unit A2 of the REC A2 may be configured to exchange trajectory information with another roadside device (such as the REC A1 or the REC A3) through the RSU A2. The fusion sensing unit A2 may also process the obtained trajectory information. The fusion sensing unit A2 may further generate other information related to the trajectory information. For example, the fusion sensing unit A2 may be configured to allocate traffic participant indication information (the traffic participant indication information may be, for example, an identifier of a traffic participant) to a sensed traffic participant. For another example, the fusion sensing unit A2 may be configured to obtain trajectory information from an upper-level REC (for example, the fusion sensing unit A1 of the REC A1 shown in FIG. 3), and may transfer the trajectory information to a lower-level REC (for example, the fusion sensing unit A3 of the REC A3 shown in FIG. 3). For another example, the fusion sensing unit A2 may be configured to identify a moving trajectory of a same traffic participant. For another example, the fusion sensing unit A2 may be configured to screen trajectory information of a same traffic participant, to remove redundant trajectory information.

With reference to FIG. 1 to FIG. 4, the following describes an interaction method according to an embodiment of this application.

401: A first roadside device obtains second feature information of a second traffic participant, where the second feature information is used to identify the second traffic participant.

402: The second roadside device determines a global identifier of the second traffic participant.

403: The second roadside device sends the second feature information and first global identification information of the second traffic participant to the first roadside device, where the first global identification information indicates a global identifier of the second traffic participant.

Correspondingly, the first roadside device receives the second feature information and the first global identification information from the second roadside device.

The second roadside device may be located upstream in a moving direction of the second traffic participant relative to the first roadside device.

404: The first roadside device obtains first feature information of a first traffic participant, where the first feature information is used to identify the first traffic participant.

An execution sequence of 404 and 403 may not be limited in this embodiment of this application.

405: The first roadside device compares the first feature information with the second feature information, to determine that the first traffic participant and the second traffic participant are a same traffic participant.

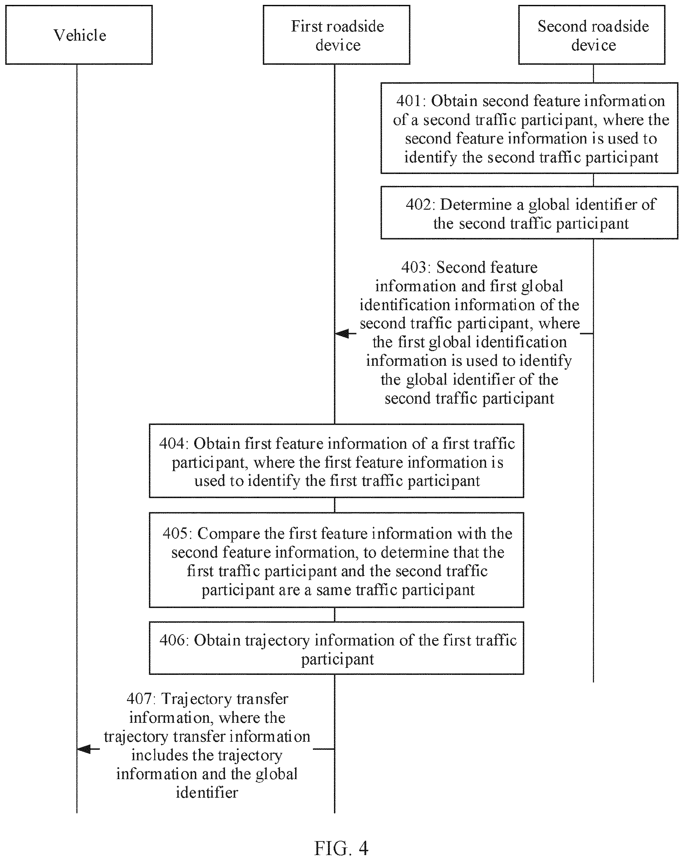

Optionally, the interaction method shown in FIG. 4 may further include step 406 and step 407.

406: The first roadside device obtains trajectory information of the first traffic participant.

407: The first roadside device sends a trajectory transfer message, where the trajectory transfer message includes the trajectory information and the global identifier.

In the example shown in FIG. 4, the first roadside device may send the trajectory transfer message to a vehicle. Correspondingly, the vehicle may receive the trajectory transfer message from the first roadside device.

In another example, the first roadside device may send the trajectory transfer message to another roadside device (for example, the second roadside device). Correspondingly, the another roadside device may receive the trajectory transfer message from the first roadside device.

The following describes step 401 to step 404 with reference to FIG. 1 and FIG. 4.

The roadside device a in FIG. 1 is used as an example. The roadside device a may obtain, by using a sensor device, trajectory information a of one or more traffic participants in a coverage area of the roadside device a. The one or more traffic participants in a coverage area of the roadside device a include the vehicle a, the vehicle b, and the pedestrian 1 shown in FIG. 1. For the roadside device a, the trajectory information a in the coverage area of the roadside device a may belong to, for example, local trajectory information.

The trajectory information may include, for example, one or more of the following information entries: a sensing time, a type of a traffic participant, appearance of the traffic participant, a traffic participant model, a license plate number of the traffic participant, a position, a moving speed, and a moving direction. Representation forms of the trajectory information include, for example, an image, pixel data, code, a feature vector, and a result output by a trajectory information processing module.

The sensing time information may be, for example, information about a moment at which a sensor device or a roadside device senses the traffic participant.

The type of the traffic participant may be, for example, a motor vehicle, a non-motor vehicle, a pedestrian, a truck, a bus, a large vehicle, a medium vehicle, or a small vehicle.

When the traffic participant is a vehicle, an appearance of the traffic participant may include, for example, a color, a size, and a shape of the vehicle. When the traffic participant is a pedestrian, the appearance of the traffic participant may include, for example, a pedestrian gender, pedestrian dressing (for example, a dressing type and a dressing color), and a body feature (for example, a height, a body shape, and a facial feature).

The traffic participant model may include, for example, a vehicle brand, a vehicle product label, and the like.

For example, the license plate number of the traffic participant may include license plate information of a vehicle, an identity number of a pedestrian, and the like.

The position may include, for example, longitude and latitude coordinates of the traffic participant, and a relative position (for example, a left-side road and a right-side road) of the traffic participant on a road.

The moving speed may include, for example, a driving speed of a vehicle, a walking speed of a pedestrian, and the like.

The moving direction may include, for example, a traveling direction angle of a vehicle, a walking direction angle of a pedestrian, or the like.

The vehicle a may communicate with a Vehicle to Everything communication device in a line-of-sight sensing range of the vehicle a. For example, the roadside device a may be located in the line-of-sight sensing range of the vehicle a. Therefore, the roadside device a may send the trajectory information a of the vehicle a, the vehicle b, and the pedestrian 1 to the vehicle a by using a trajectory transfer message in a manner such as broadcast, multicast, or unicast. Correspondingly, the vehicle a may receive the trajectory transfer message from the roadside device a, to obtain the trajectory information a in the coverage area of the roadside device a. For example, the vehicle a may plan a driving solution based on the trajectory information a delivered by the roadside device a, for example, avoiding the vehicle b, following a traveling route of the vehicle b, or keeping a safe distance from the vehicle b.

The roadside device b in FIG. 1 is used as an example. The roadside device b may be located outside a line-of-sight range of the vehicle a and in a beyond-line-of-sight range of the vehicle a. The vehicle b and the vehicle c may be located in the coverage area of the roadside device b. The roadside device b may obtain trajectory information b, and the trajectory information b may include trajectory information of the vehicle b and trajectory information of the vehicle c. The trajectory information b may include trajectory information outside the coverage area of the roadside device a. In an example, the roadside device b may send the trajectory information b to the roadside device a. The roadside device a may receive the trajectory information b from the roadside device b, to obtain the trajectory information in the coverage area of the roadside device b. For the roadside device a, the trajectory information b may belong to surrounding trajectory information.

A possible scenario in which the vehicle b travels from the coverage area of the roadside device a to the coverage area of the roadside device b is described herein. In the scenario shown in FIG. 1, the roadside device b may be located downstream in the moving direction of the vehicle b relative to the roadside device a. When observed along a moving direction of the vehicle b, the roadside device b is located in front of the vehicle b relative to the roadside device a, and the roadside device b may be a downstream roadside device of the roadside device a. When observed along the moving direction of the vehicle b, the roadside device a is located behind the vehicle b relative to the roadside device b, and the roadside device a may be an upstream roadside device of the roadside device b.

When the vehicle b is in the coverage area of the roadside device a, the roadside device a may obtain the feature information a of the vehicle b. For example, the roadside device a obtains the feature information a by using a corresponding sensor device. For another example, the roadside device a may extract some or all of trajectory information a1 of the vehicle b as the feature information a.

The feature information may be used to identify a traffic participant. The feature information of a traffic participant may be used to indicate at least some features of the traffic participant. The feature information of a traffic participant may be used to identify and determine the traffic participant. The feature information of the traffic participant may include some information of the trajectory information. The feature information of the traffic participant may include other information in addition to the trajectory information.

For example, the feature information a of the vehicle b may include one or more of license plate information, a vehicle brand, a vehicle product label, a vehicle type, a vehicle model, a vehicle color, a vehicle size, and a vehicle shape of the vehicle b. In another example, the feature information a of the vehicle b may further include other information.

The roadside device a may determine a global identifier 1 of the vehicle b based on the feature information a. The roadside device a may send the feature information a of the vehicle b and the global identifier 1 of the vehicle b to the roadside device b. Correspondingly, the roadside device b may obtain the feature information a and the global identifier 1 of the vehicle b from the roadside device a. Optionally, the roadside device a may further send a trajectory transfer message a1 to the vehicle a, where the trajectory transfer message a1 includes the trajectory information a1 and the global identifier 1 of the vehicle b. Correspondingly, the vehicle a may receive the trajectory transfer message a1 from the roadside device a, to obtain the trajectory information a1 and the global identifier 1.

The roadside device a may determine the global identifier 1 of the vehicle b in a plurality of manners.

For example, when the vehicle b is located in the coverage area of the roadside device a, the roadside device a may obtain the feature information a of the vehicle b by using a connected or corresponding sensor device. In a possible scenario, the roadside device a may directly generate or configure the global identifier 1 of the vehicle b based on the obtained feature information a.

In another possible scenario, the roadside device a may identify the feature information a, and determine whether the roadside device a has previously received feature information a' that matches the feature information a.

If the roadside device a has previously received the feature information a' that matches the feature information a, the roadside device a may determine, as the global identifier of the vehicle b, a global identifier indicated by the previously received feature information a'. For example, the vehicle b may previously appear in a coverage area of an upstream roadside device of the roadside device a, and the upstream roadside device of the roadside device a may send the feature information a' and the global identifier 1 of the vehicle b to the roadside device a. In this way, after the vehicle b moves to the coverage area of the roadside device a, the roadside device a may inherit the global identifier 1 of the vehicle b from the upstream roadside device of the roadside device a.

If the roadside device a has not previously received the feature information a' that matches the feature information a, the roadside device a may generate or configure the global identifier 1 of the vehicle b based on the obtained feature information a. Optionally, in a moving process, the vehicle b may appear in the coverage area of the roadside device a for the first time.

The coverage area of the roadside device may be an overall coverage area of one or more sensor devices corresponding to the roadside device, or an overall coverage area of one or more sensor devices communicating with the roadside device, or an overall coverage area of one or more sensor devices connected to the roadside device, or an overall coverage area of one or more sensor devices managed by the roadside device. The sensor device may be, for example, a device such as a radar or a camera.

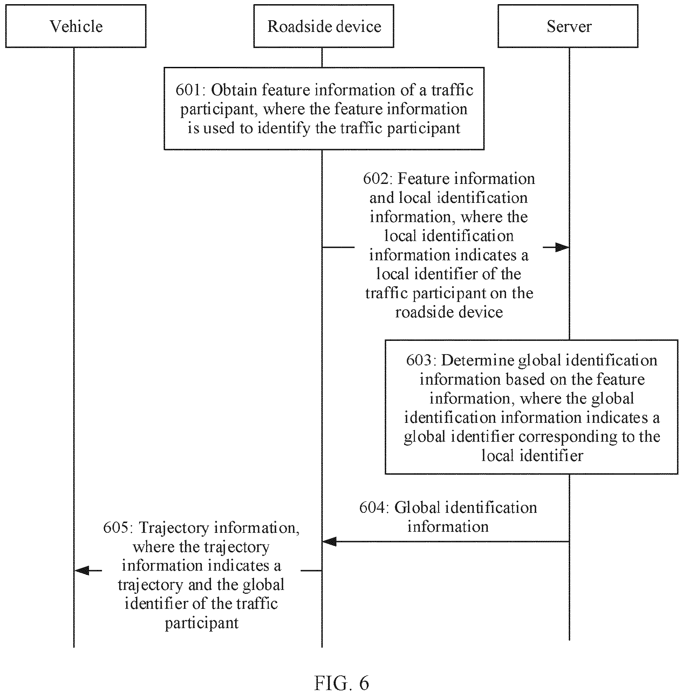

For another example, when the vehicle b appears in the coverage area of the roadside device a, the roadside device a may obtain the feature information a of the vehicle b by using a connected or corresponding sensor device. The roadside device a may report the feature information a of the vehicle b to the server, and the server configures the global identifier 1 for the vehicle b. The roadside device a may determine the global identifier 1 of the vehicle b by receiving the global identifier 1 of the vehicle b from the server. For a specific implementation in which the server of the roadside device a receives the global identifier, refer to the example shown in FIG. 6.

The following uses the global identifier 1 as an example to describe content of a global identifier provided in this embodiment of this application. Optionally, the global identifier includes one or more of the following: a road identifier, a road operator identifier, a server identifier, a sensing network identifier, and a local identifier of a traffic participant.

The road identifier may indicate one or more of the following: a name of a city in which the road is located, a name of an urban area in which the road is located, a name of a street in which the road is located, a name of the road, a number of the road, an area in which the road is located, and the like. For example, the road identifier may indicate No. 123 of a road A, a middle section of a highway B, a road D in an area C, a road F in a city E, a road H in a street G, and the like.

In an example, the global identifier 1 may be generated or configured by the roadside device a, and the road identifier may be an identifier of a road on which the roadside device a is located.

In another example, the global identifier 1 may be generated or configured by the server, and the traffic participant appears in the coverage area of the roadside device a for the first time. In this case, the road identifier may be an identifier of a road on which the roadside device a is located.

The road operator identifier may be used to indicate an organization, a group, or an individual that has the right to engage in a road transport business activity. For example, the road operator identifier may include an identity (ID) of an organization A, an identity (ID) of a group B, and identity (ID) information of a legal person C.

In an example, the global identifier 1 may be generated or configured by the roadside device a, and the road identifier may be an identifier of an operator of a road on which the roadside device a is located.

In another example, the global identifier 1 may be generated or configured by the server, and the traffic participant appears in the coverage area of the roadside device a for the first time. In this case, the road identifier may be an identifier of an operator of a road on which the roadside device a is located.

The server identifier may be used to indicate a server. For example, the server identifier may include a number, an address, and the like of the server.

In an example, with reference to FIG. 1, the global identifier 1 may be generated or configured by the roadside device a, the roadside device a is located in the coverage area of the server 1, and the server identifier may be used to indicate the server 1.

In another example, the global identifier 1 may be generated or configured by the server 1, and the server identifier may be used to indicate the server 1.

The sensing network identifier may be used to indicate an identifier of a network formed by a group of roadside devices. For example, in a first phase of a project, a first group of roadside devices are disposed on the roadside, and the first group of roadside devices may form a first-phase sensing network. In a second phase of the project, a second group of roadside devices are disposed on the roadside, and the second group of roadside devices may form a second-phase sensing network.

In an example, the global identifier 1 may be generated or configured by the roadside device a. In this case, the sensing network identifier may be an identifier of a roadside device group to which the roadside device a belongs or an identifier of a sensing network to which the roadside device a belongs.

In another example, the global identifier 1 may be generated or configured by the server, and the traffic participant appears in the coverage area of the roadside device a for the first time. In this case, the road identifier may be an identifier of a roadside device group to which the roadside device a belongs or an identifier of a sensing network to which the roadside device a belongs.

Optionally, the local identifier of the traffic participant may include one or more of the following: a sensing device identifier, a roadside computing unit identifier, an identifier of a pole position in which a roadside device is deployed, and an identifier of the traffic participant. In an example, the local identifier of the traffic participant may be the first local identifier of the traffic participant. In other words, the local identifier of the traffic participant may be a local identifier configured for the traffic participant for the first time. A roadside device that configures the local identifier for the traffic participant for the first time may be referred to as a first roadside device that captures the traffic participant.

The sensing device identifier may refer to an identifier of a sensor device corresponding to a roadside device, for example, an identifier of a camera or an identifier of a radar. The sensing device identifier in the global identifier may also be referred to as the first sensing device identifier. The sensing device identifier may be, for example, a roadside device identifier.

In an example, the global identifier 1 may be generated or configured by the roadside device a, and the sensing device identifier may be an identifier of a sensor device corresponding to the roadside device a.

In another example, the global identifier 1 may be generated or configured by the server, and the traffic participant appears in the coverage area of the roadside device a for the first time. In this case, the sensing device identifier may be an identifier of a sensor device corresponding to the roadside device a.

The roadside computing unit identifier may be used to indicate an identifier of a roadside computing unit (which may also be a roadside edge computing unit). The global identifier 1 may be generated by the roadside computing unit. For example, the roadside computing unit may be one or more roadside computing units included in the roadside device. Optionally, the roadside device may further include a roadside unit. For another example, the roadside computing unit may be one or more roadside computing units that may be connected to or communicate with the roadside device. Optionally, the roadside device may be a roadside unit. For another example, the roadside computing unit may be a roadside device. The roadside computing unit identifier in the global identifier may also be referred to as a first roadside computing unit identifier. For example, the roadside computing unit identifier may be a roadside device identifier.

In an example, the global identifier 1 may be generated or configured by the roadside device a. In this case, the roadside computing unit identifier may be a roadside computing unit identifier corresponding to the roadside device a.

In another example, the global identifier 1 may be generated or configured by the server, and the traffic participant appears in the coverage area of the roadside device a for the first time. In this case, the roadside computing unit identifier may be a roadside computing unit identifier corresponding to the roadside device a.

Roadside devices are usually disposed on poles on both sides of a road. A pole position may be a position of a pole on which a roadside device is located. Each pole position may have a pole position identifier. The identifier of the pole position in which the roadside device is deployed may be an identifier of a pole position in which the roadside device is deployed. The pole position identifier in the global identifier may also be referred to as a first pole position identifier. The first pole position identifier may be an identifier of a pole on which the first roadside device is located.

In an example, the global identifier 1 may be generated or configured by the roadside device a, and the pole position identifier may be an identifier of a pole position in which the roadside device a is located.

In another example, the global identifier 1 may be generated or configured by the server, and the traffic participant appears in the coverage area of the roadside device a for the first time. In this case, the pole position identifier may be an identifier of a pole position in which the roadside device a is located.

The traffic participant identifier may be an identifier generated or configured by the roadside device for the traffic participant. The roadside device may allocate traffic participant identifiers to the plurality of traffic participants in the coverage area of the roadside device based on the time at which the plurality of traffic participants appear in the coverage area of the roadside device. For example, a traffic participant 1, a traffic participant 2, and a traffic participant 3 sequentially appear in a coverage area of the first roadside device, and traffic participant identifiers of the traffic participant 1, the traffic participant 2, and the traffic participant 3 may be, for example, 001, 002, and 003. The traffic participant identifier in the global identifier may also be referred to as a first traffic participant identifier.

In an example, the global identifier 1 may be generated or configured by the roadside device a, and the traffic participant identifier may be a traffic participant identifier configured by the roadside device a.

In another example, the traffic participant appears in the coverage area of the roadside device a for the first time. The roadside device a may generate or configure a traffic participant identifier for a traffic participant, and report the traffic participant identifier to the server 1. The roadside device a may be located in the coverage area of the server 1. The server 1 may generate or configure a global identifier 1 including the traffic participant identifier. The traffic participant identifier in the global identifier 1 may reflect a sequence in which the traffic participant appears in the coverage area of the roadside device a for the first time (that is, the traffic participant is captured by the roadside device a for the first time) compared with another traffic participant.

The traffic participant identifier in the global identifier 1 may reflect a sequence in which the traffic participant appears in the coverage area of the roadside device for the first time (that is, the traffic participant is captured by the roadside device for the first time) compared with another traffic participant. For example, that the traffic participant identifier in the global identifier 1 is 12 may mean that the traffic participant is the twelfth traffic participant that appears in the coverage area of the roadside device for the first time.

Optionally, the roadside device a may further configure a local identifier of the vehicle b to be a local identifier a1 based on the feature information a of the vehicle b. The roadside device a may store a correspondence between the global identifier 1 and the local identifier a1. Optionally, when the roadside device a sends the trajectory information a1 and the global identifier 1 of the vehicle b to the vehicle a, the trajectory transfer message a1 may further include a local identifier a1 of the vehicle b in the roadside device a. For the local identifier a1 generated by the roadside device a, refer to the local identifier of the traffic participant in the foregoing global identifier. Details are not described herein again. A roadside device may manage and maintain the local identification information configured by the roadside device. Different roadside devices may configure different local identifiers for a same traffic participant, so as to simplify management and maintenance of data by the roadside device.

After the vehicle b moves to the coverage area of the roadside device b, the roadside device b may obtain the feature information b of the vehicle b. For a specific manner in which the roadside device b obtains the feature information b, refer to the foregoing specific implementation in which the roadside device a obtains the feature information a.

It can be learned with reference to the foregoing descriptions that the roadside device b may obtain the feature information a and the global identifier of the vehicle b from the roadside device a. The roadside device b may determine that the feature information a matches the feature information b, and determine that a traffic participant corresponding to the feature information b is the vehicle b indicated by the roadside device a. Therefore, the roadside device b may determine that the global identifier of the vehicle b is the global identifier 1.

There may be a plurality of possible implementations for determining that the feature information a matches the feature information b. It is assumed that the feature information a may include an information entry a, the feature information b may include an information entry b, and a type of the information entry a may be the same as a type of the information entry b.

In an example, that the feature information a matches the feature information b may mean that content of the feature information a is the same as content of the feature information b. For example, license plate information indicated by the feature information a is the same as license plate information indicated by the feature information b.

In an example, that the feature information a matches the feature information b may mean that the feature information a may correspond to the feature information b (the feature information a may be slightly different from the feature information b, or a degree of matching between the feature information a and the feature information b may be higher than a preset matching threshold). For example, if both the information entry a and the information entry b are position information, and a distance between a position indicated by the information entry a and a position indicated by the information entry b is less than a preset distance, it may be determined that the feature information a matches the feature information b. For another example, the roadside device b may input the information entry a and the information entry b into a feature information processing model (the feature information processing model may be, for example, a neural network model). The feature information processing model may separately perform data processing such as feature extraction, convolution, and pooling on the information entry a and the information entry b, to obtain a degree of matching between the information entry a and the information entry b. If the degree of matching between the information entry a and the information entry b is higher than the preset matching threshold, it may be determined that the information entry a matches the information entry b.

Optionally, the matching between the feature information a and the feature information b may further meet the following: priorities of information entry types of the feature information a and the feature information b are higher than a preset priority.

For example, if license plate information included in the feature information a matches license plate information included in the feature information b, and a priority of the license plate information is higher than that of another information entry, it may be determined that the feature information a matches the feature information b.

Optionally, the matching between the feature information a and the feature information b may meet the following: M information entries of the feature information a match M information entries of the feature information b, the M information entries of the feature information a are in a one-to-one correspondence with the M information entries of the feature information b (entry types of two corresponding information entries may be the same), and M is greater than a preset entry quantity.

For example, if all information entries in the feature information a match all information entries in the feature information b, it may be determined that the feature information a matches the feature information b.

Optionally, the roadside device b may send, by using a trajectory transfer message b1, the trajectory information b1 and the global identifier 1 of the vehicle b to the vehicle c located in the coverage area of the roadside device b. Optionally, the roadside device b may further send the trajectory information b1 and the global identifier 1 of the vehicle b to the roadside device a, and the roadside device a forwards the trajectory information b1 and the global identifier 1 to the vehicle a. Correspondingly, the vehicle a may obtain the trajectory information b1 and the global identifier 1. The vehicle a or the vehicle c may obtain a continuous trajectory of the vehicle b through fitting based on the trajectory information a1, the trajectory information b1, and the global identifier 1.

Optionally, the roadside device b may further configure the local identifier of the vehicle b to be a local identifier b 1 based on the feature information b of the vehicle b. The roadside device b may store a correspondence between the global identifier 1 and the local identifier b1. When the roadside device b sends the trajectory information b1 and the global identifier 1 of the vehicle b to the vehicle c, the trajectory transfer message b1 may further include the local identifier b1 of the vehicle b on the roadside device b. Similarly, when the roadside device b sends the trajectory information b1 and the global identifier 1 of the vehicle b to the vehicle a by using the roadside device a, the roadside device b may further send the local identifier b1 of the vehicle b to the vehicle a.

The local identifier b1 generated by the roadside device b may include one or more of the following: a sensing device identifier, a roadside computing unit identifier, an identifier of a pole position in which the roadside device is deployed, and an identifier of a traffic participant. The local identifier b 1 generated by the roadside device b may be different from the local identifier a1 generated by the roadside device a. For a specific implementation in which the roadside device b generates the local identifier b1, refer to the foregoing specific implementation in which the roadside device a generates the local identifier a1. Details are not described herein again.

In an example, when the roadside device a delivers the trajectory information of the vehicle b, the trajectory transfer message a1 may carry only the global identifier 1 of the vehicle b, and does not carry the local identifier a1 of the vehicle b. When the roadside device b delivers the trajectory information of the vehicle b, the trajectory transfer message b1 may carry both the global identifier 1 of the vehicle b and the local identifier b1 of the vehicle b. When the roadside device a delivers the trajectory information of the traffic participant, the trajectory transfer message may not indicate the local identifier of the traffic participant, and may reflect that the traffic participant appears in the coverage area of the roadside device a for the first time. Therefore, more content may be indicated by using a relatively small amount of information, thereby improving interaction efficiency.

The roadside device b may further send the feature information (which may be the feature information a or the feature information b) and the global identifier 1 of the vehicle b to the roadside device c shown in FIG. 1. In the scenario shown in FIG. 1, the roadside device c may be located downstream in the moving direction of the vehicle b relative to the roadside device b. In this case, after the vehicle b travels to the coverage area of the roadside device c, the roadside device c may determine, based on the feature information c of the vehicle b obtained by the sensor device and the feature information of the vehicle b that is received from the roadside device b, that the global identifier of the vehicle b is the global identifier 1. Similarly, the roadside device c may deliver the trajectory information c1 and the global identifier 1 of the vehicle b by sending the trajectory transfer message c1.

In the example shown in FIG. 1, the roadside device b may be located in the coverage area of the server 1, the roadside device c may be located in the coverage area of the server 2, and the server 1 and the server 2 may be different.

In an example, the roadside device b may interact with the roadside device c by using the server 1 and the server 2. The server 2 may subscribe to, from the server 1, the feature information and the global identifier that are of the traffic participant and that are obtained by the roadside device b. With reference to the foregoing example, the server 1 may forward, to the server 2, the feature information and the global identifier 1 of the vehicle b from the roadside device b, so that the roadside device c may obtain, from the server 2, the feature information and the global identifier 1 of the vehicle b that are received from the roadside device b.

In another example, the server 1 may obtain the address and the topology information of the roadside device c from the server 2. The server 2 may obtain the address and the topology information of the roadside device b from the server 1. The server 1 may forward the address and the topology information of the roadside device c to the roadside device b. The server 2 may forward the address and the topology information of the roadside device b to the roadside device c. In this way, the roadside device b and the roadside device c may directly interact with each other. The roadside device b may send the feature information and the global identifier 1 of the vehicle b to the roadside device c based on the address and the topology information of the roadside device c.

Optionally, the roadside device c may generate or configure the local identifier c1 of the vehicle b based on the feature information c of the vehicle b. The roadside device c may store a correspondence between the local identifier c1 and the global identifier 1. When the roadside device c delivers the trajectory information c1 and the global identifier 1 of the vehicle b, the trajectory transfer message c1 may further include the local identifier c1 of the vehicle b on the roadside device c.

The local identifier c1 generated by the roadside device c may include one or more of the following: a sensing device identifier, a roadside computing unit identifier, an identifier of a pole position in which the roadside device is deployed, and an identifier of a traffic participant. The local identifier c1 generated by the roadside device c may be different from the local identifier a1 generated by the roadside device a, or may be different from the local identifier b1 generated by the roadside device b. For a specific implementation in which the roadside device c generates the local identifier c1, refer to the foregoing specific implementation in which the roadside device a generates the local identifier a1. Details are not described herein again.

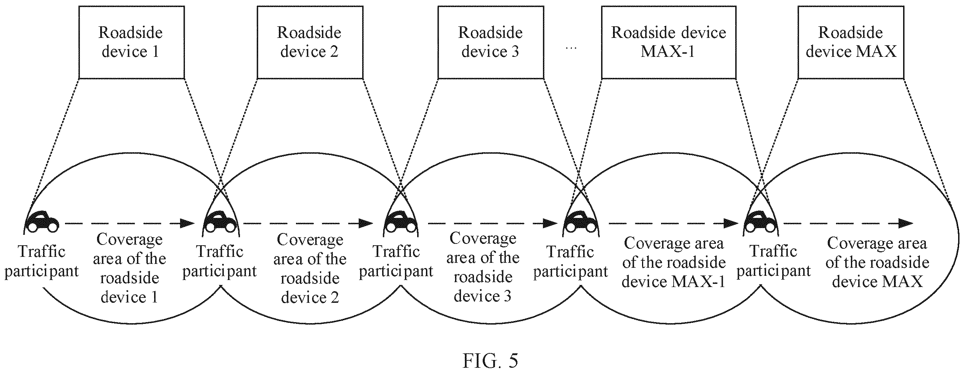

With reference to FIG. 1 and FIG. 4, the foregoing describes an example in which a roadside device inherits a global identifier of a traffic participant from another roadside device. With reference to FIG. 5, the following describes a possible scenario in which a global identifier is inherited between roadside devices.

Based on a moving trajectory of the traffic participant in FIG. 5, the traffic participant may sequentially pass through coverage areas of the roadside device 1, the roadside device 2, the roadside device 3, ..., the roadside device Max-1, and the roadside device MAX. The traffic participant may finally pass through the coverage area of the roadside device MAX. In other examples, the traffic participant may pass through coverage areas of more or fewer roadside devices.

The traffic participant may appear in the coverage area of the roadside device 1 for the first time. The roadside device 1 may capture feature information 1 of the traffic participant, and generate a global identifier of the traffic participant. The roadside device 1 may send the feature information 1 and the global identifier to the roadside device 2. The roadside device 2 may receive the feature information 1 and the global identifier of the traffic participant from the roadside device 1.

Then, the traffic participant may travel to an intersection area between the coverage area of the roadside device 1 and the coverage area of the roadside device 2. The roadside device 2 may capture feature information 2 of the traffic participant. The roadside device 2 may compare the feature information 1 with the feature information 2, to determine that the traffic participant indicated by the feature information 2 is the same as the traffic participant indicated by the feature information 1. The roadside device 2 may use the global identifier received from the roadside device 1 as the global identifier that is of the traffic participant and that is indicated by the feature information 2. In other words, the roadside device 2 may obtain the global identifier of the traffic participant from the roadside device 1.

The roadside device 2 may send the feature information 1 or the feature information 2 and the global identifier to the roadside device 3. Correspondingly, the roadside device 2 may receive the feature information 1 or the feature information 2 of the traffic participant and the global identifier from the roadside device 1.

In addition, the roadside device 1 may capture trajectory information 1 of the traffic participant, and send the trajectory information 1 and the global identifier to the roadside device 2. The roadside device 2 may capture trajectory information 2 of the traffic participant. The roadside device 2 may perform trajectory fitting based on the trajectory information 1, the trajectory information 2, and the global identifier, to obtain a trajectory of the traffic participant across the roadside device 1 and the roadside device 2.

Then, the traffic participant may travel to an intersection area between the coverage area of the roadside device 2 and the coverage area of the roadside device 3. The roadside device 3 may capture feature information 3 of the traffic participant. Refer to the solution executed by the roadside device 2. The roadside device 3 may use the global identifier received from the roadside device 2 as the global identifier of the traffic participant indicated by the feature information 3. The roadside device 3 may send the feature information and the global identifier of the traffic participant to a next-level roadside device.

In addition, the roadside device 2 may capture trajectory information 3 of the traffic participant, and send the trajectory information 3 and the global identifier to the roadside device 3. The roadside device 3 may capture trajectory information 4 of the traffic participant. The roadside device 3 may perform trajectory fitting based on the trajectory information 3, the trajectory information 4, and the global identifier, to obtain a trajectory of the traffic participant across the roadside device 2 and the roadside device 3. Then, with reference to the trajectory of the traffic participant across the roadside device 1 and the roadside device 2, the trajectory of the traffic participant across the roadside device 1, the roadside device 2, and the roadside device 3 may be obtained.

Then, the traffic participant may travel to an intersection area between the coverage area of the roadside device MAX-1 and the coverage area of the roadside device MAX. Refer to the foregoing example. The roadside device MAX may capture the feature information MAX of the traffic participant, and the roadside device MAX may use the global identifier received from the roadside device MAX-1 as the global identifier of the traffic participant indicated by the feature information MAX. The roadside device MAX-1 may capture trajectory information MAX-1 of the traffic participant, and send the trajectory information MAX-1 and the global identifier to the roadside device MAX. The roadside device MAX may capture trajectory information MAX of the traffic participant. The roadside device MAX may perform trajectory fitting based on the trajectory information MAX-1, the trajectory information MAX, and the global identifier, to obtain a trajectory of the traffic participant across the roadside device MAX-1 and the roadside device MAX. With reference to the trajectory of the traffic participant across the roadside device 1, the roadside device 2, and the roadside device 3, the trajectory of the traffic participant across the roadside device 1, the roadside device 2, the roadside device 3, ..., the roadside device MAX-1, and the roadside device MAX may be obtained. The roadside device MAX may determine the global identifier of the traffic participant.

Optionally, the roadside device MAX may be a last-level roadside device, and the roadside device MAX may not send the feature information or the global identifier of the traffic participant to another roadside device.

The scenario shown in FIG. 1 further shows a scenario with a road intersection. The road section 1, the road section 2, and the road section 3 meet at a road intersection. The roadside device b may be located on a road section 1, the roadside device c may be located on a road section 2, and the roadside device e may be located on a road section 3. The roadside device b may be, for example, a roadside device that is on the road section 1 and that is closest to the road intersection position. The roadside device c may be, for example, a roadside device that is on the road section 2 and that is closest to the road intersection position. The roadside device e may be, for example, a roadside device that is on the road section 3 and that is closest to the road intersection position. The vehicle g may move from the road section 2 to the road section 3. The vehicle g may pass through a coverage area of the roadside device e and a coverage area of the roadside device c.

When the vehicle g is located in the coverage area of the roadside device, the roadside device e may obtain feature information d of the vehicle g by using a sensor device. Refer to the interaction method shown in FIG. 4. The roadside device e may obtain the global identifier 2 of the vehicle g based on the feature information d. In an example, the roadside device e may obtain the feature information e and the global identifier 2 of the vehicle g by using the upstream roadside device f, and the roadside device e may determine, based on a result of successful matching between the feature information e and the feature information d, that the global identifier of the vehicle g is the global identifier 2. In another example, the roadside device e may report the feature information e to the server 3, and receive the global identifier 2 delivered by the server 3 based on the feature information e, so that the roadside device e may determine that the global identifier of the vehicle g is the global identifier 2.

When the vehicle g is located in the coverage area of the roadside device e, the roadside device e may obtain the trajectory information a2 of the vehicle g. The roadside device e may send the trajectory information a2 and the global identifier 2 of the vehicle g by using the trajectory transfer message a2. The trajectory transfer message a2 may include trajectory information a2 and the global identifier 2. The global identifier 2 may indicate that the trajectory information a2 belongs to the vehicle g. For example, the roadside device e may send the trajectory information a2 and the global identifier 2 of the vehicle g to another vehicle in the coverage area of the roadside device e. For another example, the roadside device e may send the trajectory information a2 and the global identifier 2 of the vehicle g to another roadside device.

Optionally, the roadside device e may generate or configure the local identifier a2 of the vehicle g based on the feature information d of the vehicle g. The roadside device e may store a correspondence between the local identifier a2 and the global identifier 2. When the roadside device delivers the trajectory information a2 and the global identifier 2 of the vehicle g, the trajectory transfer message a2 may further include the local identifier a2 of the vehicle g in the roadside device e.

The vehicle g may further obtain trajectory information of another vehicle from the roadside device e.

For example, the roadside device e may obtain the trajectory information of the vehicle c from the roadside device b on the road section 1. The roadside device e may further obtain the trajectory information of the vehicle e from the roadside device c on the road section 2. The roadside device e may send the trajectory information of the vehicle c and the trajectory information of the vehicle e to the vehicle g. The vehicle g may plan a driving solution based on the trajectory information of the vehicle c and the trajectory information of the vehicle e. For example, a driving solution of the vehicle g may be, for example, avoiding the vehicle c while following the vehicle e.

The roadside device c may be located downstream of the roadside device e relative to a moving direction of the vehicle g. The roadside device e may send the global identifier 2 of the vehicle g and the feature information (for example, the feature information d) of the vehicle g to the roadside device c. After the vehicle g moves to the coverage area of the roadside device c, the roadside device c may capture the feature information f of the vehicle g. The roadside device c may compare the feature information f with the feature information of the vehicle g sent by the roadside device e, to determine that the feature information f and the feature information of the vehicle g indicate a same vehicle. The roadside device c may determine that the vehicle indicated by the feature information f is the vehicle g, and the global identifier of the vehicle indicated by the feature information f may be the global identifier 2.

When the vehicle g is located in the coverage area of the roadside device c, the roadside device c may obtain the trajectory information b2 of the vehicle g. The roadside device c may send the trajectory information b2 and the global identifier 2 of the vehicle g by using the trajectory transfer message b2. The trajectory transfer message b2 may include trajectory information b2 and the global identifier 2. The global identifier 2 may indicate that the trajectory information b2 belongs to the vehicle g. For example, the roadside device c may send the trajectory information b2 and the global identifier 2 of the vehicle g to another vehicle in the coverage area of the roadside device c. For another example, the roadside device c may send the trajectory information b2 and the global identifier 2 of the vehicle g to another roadside device.

Optionally, the roadside device c may generate or configure the local identifier b2 of the vehicle g based on the feature information f of the vehicle g. The roadside device c may store a correspondence between the local identifier b2 and the global identifier 2. When the roadside device delivers the trajectory information b2 and the global identifier 2 of the vehicle g, the trajectory transfer message b2 may further include the local identifier b2 of the vehicle g in the roadside device c.

When the vehicle g is located in the coverage area of the vehicle device c, the roadside device c may deliver trajectory information of another vehicle to the vehicle g. For a specific implementation in which the roadside device c delivers the trajectory information, refer to the foregoing example.

In a possible case, the roadside device c and the roadside device e may be located in a coverage area of a same server.

In another possible case, the roadside device c and the roadside device e may be located in coverage areas of different servers. In the example shown in FIG. 1, the roadside device c may be located in the coverage area of the server 2, the roadside device e may be located in the coverage area of the server 3, and the server 2 and the server 3 may be different.

In an example, the roadside device c may interact with the roadside device e by using the server 2 and the server 3. The server 2 may subscribe to, from the server 3, the feature information and the global identifier of the traffic participant that are obtained by the roadside device e. With reference to the foregoing example, the server 3 may forward, to the server 2, the feature information and the global identifier 2 of the vehicle g from the roadside device e, so that the roadside device c may obtain, from the server 2, the feature information and the global identifier 2 of the vehicle g that are received from the roadside device e.

In another example, the server 2 may obtain the address and the topology information of the roadside device e from the server 3. The server 3 may obtain the address and the topology information of the roadside device c from the server 2. The server 2 may forward the address and the topology information of the roadside device e to the roadside device c. The server 3 may forward the address and the topology information of the roadside device c to the roadside device e. In this way, the roadside device e and the roadside device c may directly interact with each other. The roadside device e may send the feature information of the vehicle g and the global identifier 2 to the roadside device c based on the address and the topology information of the roadside device c.

Because a vehicle on the road section 1 and a vehicle on the road section 3 may be converged into the road section 2, for the vehicle on the road section 1, trajectory information of a vehicle moving from the road section 3 to the road section 2 may be relatively important. The roadside device on the road section 1 may deliver trajectory information of a vehicle on the road section 3, so that the vehicle on the road section 1 can effectively avoid the vehicle on the road section 3.

The vehicle c in FIG. 1 is used as an example. The vehicle c is currently located on the road section 1. The vehicle c may be located in the coverage area of the roadside device b.

When the vehicle g is located in the coverage area of the roadside device e, the roadside device e may obtain the trajectory information a2 of the vehicle g. The roadside device b may directly obtain the trajectory information a2 and the global identifier 2 of the vehicle g from the roadside device e, or the roadside device b may obtain the trajectory information a2 and the global identifier 2 of the vehicle g that are obtained by the roadside device e through forwarding by another roadside device. The roadside device b may send the trajectory information a2 and the global identifier 2 of the vehicle g to the vehicle c.

When the vehicle g is located in the coverage area of the roadside device c, the roadside device c may obtain the trajectory information b2 of the vehicle g. The roadside device b may directly obtain the trajectory information b2 and the global identifier 2 of the vehicle g from the roadside device c, or the roadside device b may obtain the trajectory information b2 and the global identifier 2 of the vehicle g that are obtained by the roadside device c through forwarding by another roadside device. The roadside device b may send the trajectory information b2 and the global identifier 2 of the vehicle g to the vehicle c.

The vehicle c may obtain the trajectory information a2 and the trajectory information b2 of the vehicle g from the roadside device b. Because both the trajectory information a2 and the trajectory information b2 may be indicated by the global identifier 2, the vehicle g may determine that the trajectory information a2 and the trajectory information b2 belong to a same vehicle. The vehicle c may obtain a moving trajectory of the vehicle g through fitting based on the trajectory information a2 and the trajectory information b2, and may plan a driving solution of the vehicle c, to avoid the vehicle g. This avoids a traffic accident that may be caused when the vehicles on a plurality of road sections converge in.

In a possible scenario, when the vehicle g passes through a road intersection, the vehicle g may be located in the coverage area of the roadside device b. It can be learned based on the example shown in FIG. 1 that the vehicle g may first appear in the coverage area of the roadside device e, and then appear in the coverage area of the roadside device b. The roadside device b may obtain the feature information (for example, the feature information d or the feature information e) and the global identifier 2 of the vehicle g from the roadside device e. In this way, after the vehicle g appears in the coverage area of the roadside device b, the roadside device b may obtain the feature information g of the vehicle g. The roadside device b may compare the feature information g with the feature information of the vehicle g sent by the roadside device e, to determine that the feature information g and the feature information of the vehicle g indicate a same vehicle. The roadside device c may determine that the vehicle indicated by the feature information g is the vehicle g, and the global identifier of the vehicle indicated by the feature information g may be the global identifier 2.

If the roadside device e does not send the feature information of the vehicle g or the global identifier 2 to the roadside device b, when the vehicle g appears in the coverage area of the roadside device b, the roadside device b may treat the vehicle g as a new vehicle, and allocate a new global identifier to the vehicle g. This may interrupt the trajectory of the vehicle g at the roadside device b. The feature information of the vehicle g and the global identifier 2 are sent from the roadside device e on the road section 3 to the roadside device b on the road section 1, which improves continuity of the trajectory of the vehicle at the road intersection.

It can be learned from a moving direction of the vehicle g that the vehicle g may not appear in the coverage area of an upstream roadside device (for example, the roadside device a) of the roadside device b. The roadside device b may not send the global identifier 2 of the vehicle g to the roadside device a.

In the example shown in FIG. 1, for a vehicle on a road section 1, the roadside device c may be located downstream of the roadside device b; and for a vehicle on a road section 3, the roadside device c may be located downstream of the roadside device e. In the foregoing example, the roadside device e may send the feature information and the global identifier 2 of the vehicle g to the roadside device b and the roadside device c.

In an example, the roadside device b may no longer send the feature information or the global identifier 2 of the vehicle g to the roadside device c, even if the roadside device c is located downstream of the roadside device b. This avoids unnecessary signaling repetition and signaling redundancy, and reduces signaling overheads.

In another example, the roadside device e may send the feature information of the vehicle g and the global identifier 2 to the roadside device b, and the roadside device b may send the feature information of the vehicle g and the global identifier 2 to the roadside device c. The roadside device e may not send the feature information or the global identifier 2 of the vehicle g to the roadside device b. For example, this example may be applied to a scenario in which the vehicle g usually passes through the coverage area of the roadside device b when passing through the road intersection.

When the vehicle g is located in the coverage area of the roadside device b, the roadside device b may obtain the trajectory information c2 of the vehicle g. The roadside device b may send the trajectory information c2 and the global identifier 2 of the vehicle g by using the trajectory transfer message c2. The trajectory transfer message c2 may include trajectory information c2 and the global identifier 2. The global identifier 2 may indicate that the trajectory information c2 belongs to the vehicle g. For example, the roadside device b may send the trajectory information c2 and the global identifier 2 of the vehicle g to another vehicle in the coverage area of the roadside device b. For another example, the roadside device b may send the trajectory information c2 and the global identifier 2 of the vehicle g to another roadside device.

Optionally, the roadside device b may generate or configure the local identifier c2 of the vehicle g based on the feature information f of the vehicle g. The roadside device b may store a correspondence between the local identifier c2 and the global identifier 2. When the roadside device delivers the trajectory information c2 and the global identifier 2 of the vehicle g, the trajectory transfer message c2 may further include the local identifier c2 of the vehicle g in the roadside device b.

When the vehicle g is located in the coverage area of the vehicle device b, the roadside device b may deliver trajectory information of another vehicle to the vehicle g. For a specific implementation in which the roadside device b delivers the trajectory information, refer to the foregoing example.

With reference to FIG. 1 to FIG. 3 and FIG. 6, the following describes another interaction method according to an embodiment of this application.

601: A roadside device obtains feature information of a traffic participant, where the feature information is used to identify the traffic participant.

602: The roadside device sends the feature information and local identification information to a server, where the local identification information indicates a local identifier of the traffic participant on the roadside device.

Correspondingly, the server receives the feature information and the local identification information from the roadside device.

603: The server determines global identification information based on the feature information, where the global identification information indicates a global identifier corresponding to the local identifier.

604: The server sends the global identification information to the roadside device.

Correspondingly, the roadside device receives the global identification information from the server.

Optionally, the interaction method in FIG. 6 may further include step 605.

605: The roadside device sends trajectory information, where the trajectory information indicates a trajectory of the traffic participant and the global identifier.

In the example shown in FIG. 6, the roadside device may send the trajectory information to the vehicle. Correspondingly, the vehicle may receive the trajectory information from the roadside device.

In another example, the roadside device may send the trajectory information to another roadside device. Correspondingly, the another roadside device may receive the trajectory information from the roadside device.

The following describes step 601 to step 605 with reference to FIG. 1 and FIG. 6.

When the vehicle a is in the coverage area of the roadside device a, the roadside device a may obtain the feature information a of the vehicle a. The feature information a may be used to identify the vehicle a. For example, the roadside device a obtains the feature information a by using a corresponding sensor device. For another example, the roadside device a may extract some or all of the trajectory information of the vehicle a as the feature information a. The roadside device a may configure the local identifier of the vehicle a on the roadside device a as a local identifier a3 based on the feature information a of the vehicle a. For specific implementations of the feature information and the local identifier, refer to the foregoing specific implementations of the feature information and the local identifier.

The roadside device a may report the feature information a and the local identifier a3 of the vehicle a to the server 1.

The server 1 may have functions of allocating a global identifier to a traffic participant, and managing and maintaining an existing global identifier. With reference to the system architecture shown in FIG. 3, the server 1 may allocate a global identifier to the traffic participant by using the object management unit.

The server 1 may identify the feature information a reported by the roadside device a.

If the server 1 previously receives the feature information a' reported by the another roadside device, and the feature information a' matches the feature information a, the server 1 may determine the global identifier indicated by the feature information a' as the global identifier of the vehicle a. For example, the vehicle a may previously appear in a coverage area of an upstream roadside device of the roadside device a. The upstream roadside device of the roadside device a may report the feature information a' to the server 1. The server 1 may determine, based on the feature information a', that the global identifier of the vehicle a is the global identifier 3. After the vehicle a moves to the coverage area of the roadside device a, the server 1 may use the global identifier 3 previously configured for the vehicle a, and send the global identifier 3 to the roadside device a. For a specific implementation of determining that the feature information a matches the feature information a', refer to the foregoing specific implementation of determining that the feature information a matches the feature information b.

If the server 1 has not previously received the feature information a' that matches the feature information a, the server 1 may determine, based on the feature information a, that the global identifier of the vehicle a is the global identifier 3. Optionally, in a moving process, the vehicle a may appear in the coverage area of the roadside device a for the first time.

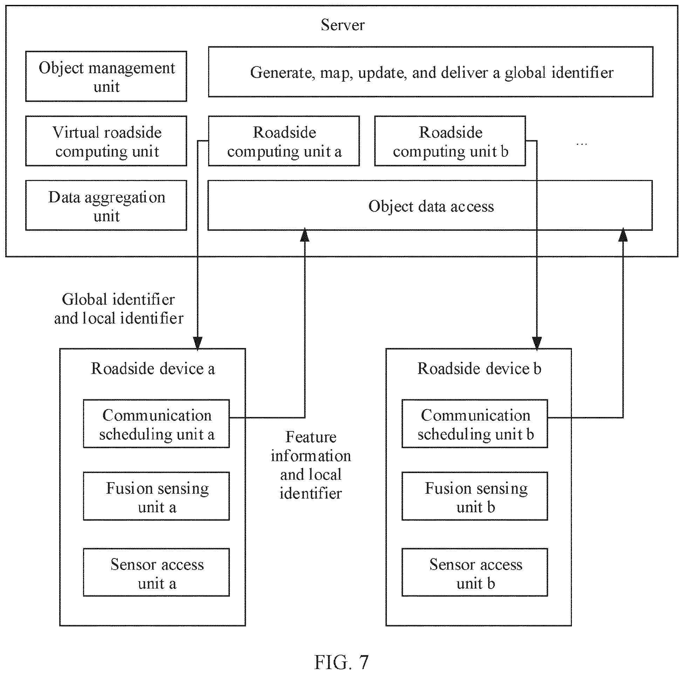

With reference to a system architecture shown in FIG. 7, the following describes a possible implementation in which the server configures a global identifier.

The system architecture shown in FIG. 7 may include a server, a roadside device a, and a roadside device b.

In an example, the server may be, for example, corresponding to the server 1 in FIG. 1. For example, the roadside device a and the roadside device b may correspond to the roadside device a and the roadside device b in FIG. 1. In another example, the server may further correspond to another server in FIG. 1, and the roadside device a and the roadside device b may further correspond to other roadside devices in FIG. 1.

In another example, the server may correspond to, for example, the server A in FIG. 3. For example, the roadside device a may correspond to a device including the RSU A1 and the REC A1 in FIG. 3, and the roadside device b may correspond to a device including the RSU B1 and the REC B1 in FIG. 3. In another example, the roadside device a and the roadside device may further correspond to other devices including the RSU and the REC in FIG. 3.

The roadside device a may obtain the feature information of the traffic participant from a corresponding sensor device by using a sensor access unit a. The roadside device a may send, to the server by using a communication scheduling unit a, the feature information obtained by the sensor access unit a. With reference to the example shown in FIG. 6, the roadside device a may generate the local identifier of the traffic participant based on the feature information obtained by the sensor access unit a. The roadside device a may further send, to the server by using the communication scheduling unit a, the local identifier generated by the roadside device a.

Similarly, the sensor access unit a of the roadside device may be further configured to obtain trajectory information. The roadside device a may send, to the roadside device b by using the fusion sensing unit a, the trajectory information obtained by the sensor access unit a.

The server may obtain, by using the data aggregation unit and in an object data access manner, the feature information and the local identifier of the traffic participant that are sent by the roadside device a. The server may generate a global identifier for the traffic participant by using the object management unit, and maintain and manage the global identifier generated by the object management unit, for example, map, update, and deliver the global identifier. The server may implement mapping of a roadside computing unit a on the server by using a virtual roadside computing unit. The server may send the global identifier of the traffic participant to the roadside device a by using the roadside computing unit a to which the virtual roadside computing unit is mapped. In this way, the server can complete mapping between the global identifier of the traffic participant and the local identifier of the traffic participant. For detailed descriptions of the data aggregation unit, the object management unit, and the virtual roadside computing unit, refer to the example shown in FIG. 3.

Then, the traffic participant may be located in a coverage area of the roadside device b. Similarly, the roadside device b may send, to the server by using a communication scheduling unit b, the feature information of the traffic participant obtained by the roadside device b. The server may obtain, by using the data aggregation unit, the feature information of the traffic participant sent by the roadside device b. The server may determine, by using the object management unit, the previously generated global identifier of the traffic participant, and send the global identifier of the traffic participant to the roadside device b by using the roadside computing unit b to which the virtual roadside computing unit is mapped.

For a specific implementation of the global identifier, refer to the foregoing specific implementation of the global identifier.

Because both the local identifier a3 and the global identifier 3 may indicate the vehicle a, there may be a correspondence between the local identifier a3 and the global identifier 3. Optionally, the server 1 may store a correspondence between the global identifier 3 and the local identifier a3.

With reference to the foregoing description, the global identifier may include a local identifier generated by the roadside device. Optionally, when the traffic participant appears in the intersection area of the coverage area of the roadside device 1 and the coverage area of the roadside device 2 for the first time, both the roadside device 1 and the roadside device 2 may send the local identifier to the server. It is assumed that the roadside device 1 reports a local identifier 1 of the traffic participant to the server, and the roadside device 1 reports a local identifier 2 of the traffic participant to the server. The global identifier generated by the server may include the local identifier 1 or the local identifier 2. For example, the server may generate the global identifier according to the first obtained local identifier.

The server 1 may send the global identifier 3 of the vehicle a to the roadside device a. The roadside device a may indicate the vehicle a by using the global identifier 3. For the roadside device b, the global identifier 3 may be used to indicate the local identifier a.

For example, when the vehicle a is located in the coverage area of the roadside device a, the roadside device a may obtain the trajectory information a3 of the vehicle a. For example, the roadside device a may send the trajectory information a3 and the global identifier 3 of the vehicle a to another vehicle (for example, the vehicle b in FIG. 1) in the service area of the roadside device a in a manner such as broadcast, multicast, or unicast.

For another example, when the vehicle a is located in the coverage area of the roadside device a, the roadside device a may send the trajectory information a3 and the global identifier 3 of the vehicle a to the roadside device b. Therefore, the roadside device b may send the trajectory information a3 and the global identifier 3 of the vehicle a to the vehicle (for example, the vehicle c in FIG. 1) in the service area of the roadside device b.

Optionally, when sending the trajectory information a3 (for example, to a vehicle or another roadside device), the roadside device a may further carry a local identifier a3 generated by the roadside device a. In addition to being used to indicate a traffic participant, the local identifier may be further used to indicate a source of the trajectory information.

When the vehicle a moves to the coverage area of the roadside device b, the roadside device b may obtain the feature information b of the vehicle a. For a specific implementation in which the roadside device b obtains the feature information b, refer to the foregoing specific implementation in which the roadside device a obtains the feature information a. The roadside device b may configure the local identifier of the vehicle a on the roadside device b to be a local identifier b3 based on the feature information b of the vehicle a. For specific implementations of the feature information and the local identifier, refer to the foregoing specific implementations of the feature information and the local identifier.

The roadside device b may report the feature information b and the local identifier b3 of the vehicle a to the server 1. Correspondingly, the server 1 may receive and identify the feature information b reported by the roadside device b. Because both the feature information b and the feature information a reported by the roadside device a are the feature information of the vehicle a, the feature information a may match the feature information b. For a specific implementation of determining that the feature information a matches the feature information b, refer to the foregoing specific implementation of determining that the feature information a matches the feature information b. The server 1 may send the previously generated global identifier 3 to the roadside device b.

Because both the local identifier b3 and the global identifier 3 may indicate the vehicle a, there may be a correspondence between the local identifier b3 and the global identifier 3. Optionally, the server 1 may store a correspondence between the global identifier 3 and the local identifier b3. With reference to the foregoing correspondence between the global identifier 3 and the local identifier a3, it can be learned that the global identifier 3 may correspond to a plurality of local identifiers. Optionally, the server 1 may update the previously stored correspondence between the global identifier 3 and the local identifier a3 to the correspondence between the global identifier 3 and the local identifier b3.

The roadside device b may indicate the vehicle a by using the global identifier 3. For the roadside device b, the global identifier 3 may be used to indicate the local identifier b3.

For example, when the vehicle a is located in the coverage area of the roadside device b, the roadside device b may obtain trajectory information b3 of the vehicle a. The roadside device b may send the trajectory information b3 and the global identifier 3 of the vehicle a to another vehicle (for example, the vehicle c in FIG. 1) in the service area of the roadside device b in a manner such as broadcast, multicast, or unicast.

For another example, when the vehicle a is located in the coverage area of the roadside device b, the roadside device b may send the trajectory information b3 and the global identifier 3 of the vehicle a to the roadside device c. In this way, the roadside device c may send the trajectory information b3 and the global identifier 3 of the vehicle a to a vehicle (for example, the vehicle e in FIG. 1) in the service area of the roadside device c.

Optionally, when sending the trajectory information b3 (for example, to a vehicle or another roadside device), the roadside device b may further carry the local identifier b3 generated by the roadside device b.

In a possible scenario, a global identifier of a traffic participant may not be exchanged between a plurality of servers.

For example, the vehicle a moves from a coverage area of the roadside device b to a coverage area of the roadside device c. The roadside device b may be located in a coverage area of the server 1. The roadside device c may be located in a coverage area of the server 2.

With reference to the foregoing description, when the vehicle a is located in the coverage area of the roadside device b, the roadside device b may indicate the vehicle a by using the global identifier 3. When the vehicle a moves to the coverage area of the roadside device c, the roadside device c may obtain the feature information c of the vehicle a. The roadside device c may configure the local identifier of the vehicle a on the roadside device c to be the local identifier c3 based on the feature information c of the vehicle a.

In an example, the roadside device c may report the feature information c and the local identifier c3 of the vehicle a to the server 2. Correspondingly, the server 2 may receive and identify the feature information c reported by the roadside device c. Because the server 2 may not previously configure a global identifier for the vehicle a, the server 2 may allocate a new global identifier 4 to the vehicle a. The global identifier 4 may be used to indicate the local identifier c3.

The roadside device c may indicate the vehicle a by using the global identifier 2. For the roadside device c, the global identifier 2 may be used to indicate the local identifier c3. Optionally, when sending the trajectory information c3 (for example, to a vehicle or another roadside device), the roadside device c may further carry a local identifier b3 generated by the roadside device c.

In another example, the roadside device b may send the feature information (for example, the feature information a and the feature information b) and the global identifier 3 of the vehicle a to the roadside device c. When determining that the feature information of the vehicle a matches the feature information c, the roadside device c may use the global identifier 3 as the global identifier of the vehicle a. Optionally, the roadside device c may send the feature information (for example, the feature information c) and the global identifier 3 of the vehicle a to the server 2. In this case, the server 2 may deliver the global identifier of the vehicle a to another roadside device in the coverage area of the server 2 by using the global identifier 3. When reporting the global identifier 3 to the server 2, the roadside device c may further report the local identifier c3. The server 2 may store a correspondence between the local identifier c3 and the global identifier 3. In this scenario, the global identifier 3 may indicate a traffic participant across servers.

The roadside device c may indicate the vehicle a by using the global identifier 3. For the roadside device c, the global identifier 3 may be used to indicate the local identifier c3. Optionally, when sending the trajectory information c3 (for example, to a vehicle or another roadside device), the roadside device c may further carry a local identifier b3 generated by the roadside device c.

In another possible scenario, the server 1 may further send the feature information (for example, the feature information a or the feature information b) and the global identifier 3 of the vehicle a to the server 2.

When the vehicle a moves to the coverage area of the roadside device c, the roadside device c may obtain the feature information c of the vehicle a. The roadside device c may configure the local identifier of the vehicle a to be the local identifier c3 based on the feature information c of the vehicle a. The roadside device c may report the feature information c and the local identifier c3 of the vehicle a to the server 2. Correspondingly, the server 2 may receive and identify the feature information c reported by the roadside device c. Because the feature information c may match the feature information of the vehicle a sent by the server 1, the server 2 may send the global identifier 3 to the roadside device c.

Because both the local identifier c3 and the global identifier 3 may indicate the vehicle a, there may be a correspondence between the local identifier c3 and the global identifier 3. Optionally, the server 2 may store a correspondence between the global identifier 3 and the local identifier c3. With reference to the foregoing global identifier 3 and the local identifier a3, and the correspondence between the global identifier 3 and the local identifier b3, it can be learned that the global identifier 3 may correspond to a plurality of local identifiers. In this scenario, the global identifier 3 may indicate a traffic participant across servers.

The roadside device c may indicate the vehicle a by using the global identifier 3. For the roadside device c, the global identifier 3 may be used to indicate the local identifier c3. Optionally, when sending the trajectory information c3 (for example, to a vehicle or another roadside device), the roadside device c may further carry a local identifier b3 generated by the roadside device c.

Optionally, the server 2 may subscribe to the feature information and the global identifier of the traffic participant of the server 1 from the server 1.

In the example shown in FIG. 6, the roadside device may report the local identifier to the server. In another possible example, the roadside device may not report the local identifier to the server. The roadside device may even not generate the local identifier of the traffic participant based on the feature information of the traffic participant. In other words, in the example shown in FIG. 6, the local identifier may not be necessary. In this example, the server may establish a correspondence between the feature information of the traffic participant and the global identifier.

Theoretically, trajectories of a same vehicle in coverage areas of a plurality of roadside devices may form a continuous trajectory. However, because different roadside devices are configured with different local identifiers, a vehicle cannot form a trajectory of a same vehicle across a plurality of roadside devices by using only the local identifiers. When a plurality of traffic participants travel from the coverage area of the first roadside device to the coverage area of the second roadside device, the trajectory information presents a result: A plurality of traffic participants disappear from the coverage area of the first roadside device, and a plurality of traffic participants appear in the coverage area of the second roadside device. This increases difficulty in processing the trajectory information. For example, it is relatively difficult to identify an association relationship between a plurality of traffic participants that appear and a plurality of traffic participants that disappear. Therefore, a logical relationship between a plurality of pieces of cross-device and cross-region trajectory information is relatively complex and difficult to sort out.

When the vehicle can obtain trajectory information from a plurality of roadside devices, a same global identifier is used between the plurality of roadside devices, so that the vehicle can process a continuous trajectory of a traffic participant in a scenario in which the vehicle crosses the plurality of roadside devices. For example, a same traffic participant may pass through coverage areas of a plurality of roadside devices. Trajectory information of a same traffic participant may be delivered by a plurality of roadside devices. The global identifier may be shared by a plurality of roadside devices. In other words, the plurality of roadside devices may use a same global identifier to identify a same traffic participant. The vehicle may determine, based on the global identifier, whether a plurality of pieces of trajectory information delivered by the plurality of roadside devices in a period of time belong to the same traffic participant.

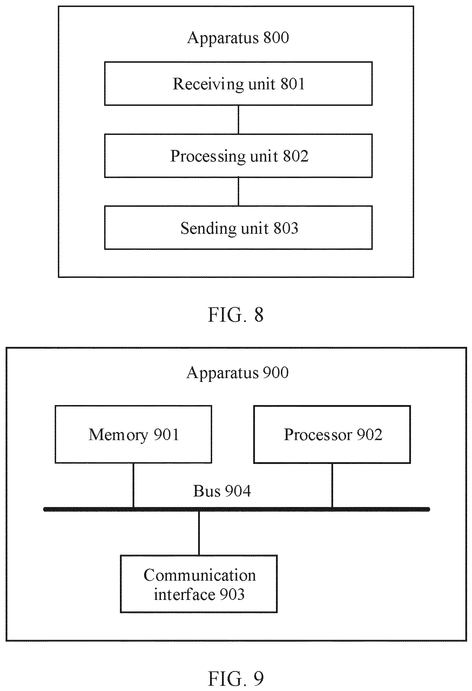

FIG. 8 is a schematic diagram of a structure of an apparatus 800 according to an embodiment of this application. The apparatus 800 includes one or more of a receiving unit 801, a processing unit 802, and a sending unit 803. The apparatus 800 may be configured to perform the steps of the interaction methods according to the embodiments of this application.

The apparatus 800 may be, for example, the roadside device shown in FIG. 1 to FIG. 3.

For example, the processing unit 802 may be configured to perform step 401 and step 403 in the method shown in FIG. 4, the receiving unit 801 may be configured to perform step 402 in the method shown in FIG. 4, and the sending unit 803 may be configured to perform step 404 in the method shown in FIG. 4.

For another example, the processing unit 802 may be configured to perform step 601 in the method shown in FIG. 6, the receiving unit 801 may be configured to perform step 604 in the method shown in FIG. 6, and the sending unit 803 may be configured to perform step 602 and step 605 in the method shown in FIG. 6.

In an example, the processing unit 802 is configured to obtain first feature information of a first traffic participant, where the first feature information is used to identify the traffic participant; the processing unit 802 is further configured to obtain trajectory information of the first traffic participant; the receiving unit 801 is configured to receive second feature information and first global identification information of a second traffic participant from a second roadside device, where the second feature information is used to identify the second traffic participant, the first global identification information indicates a global identifier of the first traffic participant, and the second roadside device is located upstream in a moving direction of the first traffic participant relative to the apparatus 800; the processing unit 802 is further configured to compare the first feature information with the second feature information, to determine that the first traffic participant and the second traffic participant are a same traffic participant; and the sending unit 803 is configured to send a trajectory transfer message, where the trajectory transfer message includes the trajectory information and the global identifier.

In another example, the processing unit 802 is configured to obtain second feature information of a second traffic participant; the processing unit 802 is further configured to determine a global identifier of the second traffic participant; and the sending unit 803 is configured to send the second feature information and first global identification information of the second traffic participant to a first roadside device, where the first global identification information indicates a global identifier of the second traffic participant, and the apparatus 800 is located upstream in a moving direction of the second traffic participant relative to the first roadside device.

In still another example, the processing unit 802 is configured to obtain first feature information of a traffic participant, where the first feature information is used to identify the traffic participant; the sending unit 803 is configured to send the first feature information and first local identification information to a server, where the first local identification information indicates a first local identifier of the traffic participant on the first roadside device; and the receiving unit 801 is configured to receive first global identification information from the server, where the first global identification information indicates a global identifier corresponding to the first local identifier.

The apparatus 800 may alternatively be, for example, the servers shown in FIG. 1 to FIG. 3.

For example, the receiving unit 801 may be configured to perform step 602 in the method shown in FIG. 6, the processing unit 802 may be configured to perform step 603 in the method shown in FIG. 6, and the sending unit 803 may be configured to perform step 604 in the method shown in FIG. 6.

In an example, the receiving unit 801 is configured to receive first feature information and first local identification information of a traffic participant from a first roadside device, where the first local identification information indicates a first local identifier of the traffic participant; and the sending unit 803 is configured to send first global identification information to the first roadside device, where the first global identification information indicates a global identifier corresponding to the first local identifier.

Optionally, the processing unit 802 is configured to determine the first global identification information based on the feature information.

Only one or more of the units in the embodiment shown in FIG. 8 may be implemented by software, hardware, firmware, or a combination thereof. The software or firmware includes but is not limited to computer program instructions or code, and may be executed by a hardware processor. The hardware includes but is not limited to various integrated circuits, for example, a central processing unit (CPU, central processing unit), a digital signal processor (DSP, digital signal processor), a field programmable gate array (FPGA, field programmable gate array), or an application-specific integrated circuit (ASIC, application-specific integrated circuit).

Optionally, the receiving unit 801 may use one or more receiving manners, where the receiving manner includes but is not limited to receiving through cellular communication, Wi-Fi (wireless fidelity, wireless local area network), WiMAX (global interoperability microwave access, worldwide interoperability for microwave access), Bluetooth (Bluetooth communication technology), ZigBee (ZigBee communication technology), optical communication, satellite communication, infrared communication, transmission line communication, a hardware interface, or a trace on a hardware circuit board, or obtaining a parameter from a software module, or reading information from a storage component.

Optionally, the receiving unit 801 includes a plurality of receiving subunits, and the plurality of receiving subunits are separately configured to receive storage resource information of at least one of the at least two components in a terminal. Optionally, the plurality of receiving subunits are located in a plurality of different components in the terminal. Optionally, the plurality of receiving subunits receive the storage resource information in at least one receiving manner, where the receiving manner includes but is not limited to receiving through cellular communication, Wi-Fi, WiMAX, Bluetooth, ZigBee, optical communication, satellite communication, infrared communication, transmission line communication, a hardware interface, or a trace on a hardware circuit board, or obtaining a parameter from a software module, or reading information from a storage component.

Optionally, the sending unit 803 may use one or more sending manners, where the sending manner includes but is not limited to sending through cellular communication, Wi-Fi, WiMAX, Bluetooth, ZigBee, optical communication, satellite communication, infrared communication, transmission line communication, a hardware interface, or a trace on a hardware circuit board, or inputting a parameter to a software module, or writing information to a memory.

Optionally, the sending unit 803 includes a plurality of sending subunits, and the plurality of sending subunits are separately configured to send the at least one piece of indication information to the plurality of components. Optionally, the plurality of sending subunits are located in a plurality of different components in the terminal. Optionally, the plurality of sending subunits send the storage resource information in at least one sending manner, where the sending manner includes but is not limited to sending through cellular communication, Wi-Fi, WiMAX, Bluetooth, ZigBee, optical communication, satellite communication, infrared communication, transmission line communication, a hardware interface, or a trace on a hardware circuit board, or inputting a parameter to a software module, or writing information to a memory.

FIG. 9 is a schematic diagram of a structure of an apparatus 900 according to an embodiment of this application. The apparatus 900 may include at least one processor 902 and a communication interface 903.

Optionally, the apparatus 900 may further include a memory 901 and/or a bus 904. Any two or all three of the memory 901, the processor 902, and the communication interface 903 may be in communication connection by using the bus 904.

Optionally, the memory 901 may be a read-only memory (read-only memory, ROM), a static storage device, a dynamic storage device, or a random access memory (random access memory, RAM). The processor 902 may read computer instructions from the memory 901 by using the communication interface 903, and run the computer instructions, so that the apparatus 900 performs any method shown in FIG. 4 or FIG. 6 in this application. Specifically, the any method may be a method performed on either a roadside device side or a server side.

Optionally, the processor 902 may alternatively be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application may be implemented or performed. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes, in combination with hardware of the processor, the functions that need to be performed by the units included in the apparatus in embodiments of this application, or performs the steps of the interaction methods according to the embodiments of this application.

Optionally, the communication interface 903 may use a transceiver apparatus, for example, but not limited to, a transceiver, to implement communication between the apparatus and another device or a communication network. The communication interface 903 may be, for example, an interface circuit.

The bus 904 may include a path for transmitting information between the components (such as the memory 901, the processor 902, and the communication interface 903) of the apparatus.

A person skilled in the art may clearly understand that, descriptions of embodiments provided in this application may be mutually referenced. For ease and brevity of description, for example, for functions of the apparatuses and devices and performed steps that are provided in embodiments of this application, refer to related descriptions in method embodiments of this application. Reference can also be made between various method embodiments and between various apparatus embodiments.

A person skilled in the art may understand that all or some of the steps of the method embodiments may be implemented by a program instructing related hardware. The program may be stored in a computer-readable storage medium. When the program is executed, all or some of the steps of the method embodiments are performed. The foregoing storage medium includes various media that can store program code, such as a ROM, a RAM, a magnetic disk, or an optical disc.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL, digital subscriber line)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, an optical disc), a digital video disc (digital video disc, DVD), a semiconductor medium (for example, a solid state drive (solid state disk, SSD)), or the like.

In the several embodiments provided in this application, it should be understood that the disclosed system, apparatus, and method may be implemented in other manners without departing from the scope of this application. For example, the described embodiment is merely an example. For example, the module or division into the units is only logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. A person of ordinary skill in the art may understand and implement the embodiments without creative efforts.

In addition, the schematic diagrams illustrating the system, apparatus, method, and different embodiments may be combined or integrated with other systems, modules, technologies or methods without departing from the scope of this application. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interaction method, applied to a first roadside device and comprising:
obtaining first feature information of a traffic participant, wherein the first feature information is used to identify the traffic participant;
sending the first feature information and first local identification information to a server, wherein the first local identification information indicates a first local identifier of the traffic participant on the first roadside device; and
receiving the first global identification information from the server, wherein the first global identification information indicates a global identifier corresponding to the first local identifier.

2. The interaction method according to claim 1, wherein the method further comprises:
sending first trajectory information, wherein the first trajectory information indicates a trajectory of the traffic participant and the global identifier.

3. The interaction method according to claim 2, wherein the first trajectory information further indicates the first local identifier.

4. The interaction method according to any one of claims 1 to 3, wherein the global identifier comprises one or more of the following: a road identifier, a road operator identifier, a server identifier, a sensing network identifier, and the first local identifier.

5. The interaction method according to any one of claims 1 to 4, wherein the first local identifier comprises one or more of the following: a sensing device identifier, a roadside computing unit identifier, an identifier of a pole position in which a roadside device is deployed, and a traffic participant identifier.

6. The interaction method according to any one of claims 1 to 5, wherein the method further comprises:
sending the first feature information and second global identification information to a second roadside device, wherein the second global identification information indicates the global identifier, and the second roadside device is located downstream in a moving direction of the traffic participant relative to the first roadside device.

7. An interaction method, applied to a server and comprising:
receiving first feature information and first local identification information of a traffic participant from a first roadside device, wherein the first feature information is used to identify the traffic participant, and the first local identification information indicates a first local identifier of the traffic participant on the first roadside device; and
sending first global identification information to the first roadside device based on the first feature information, wherein the first global identification information indicates a global identifier corresponding to the first local identifier.

8. The interaction method according to claim 7, wherein the method further comprises:
storing a correspondence between the global identifier and the first local identifier.

9. The interaction method according to claim 7 or 8, wherein the method further comprises:
receiving second feature information and second local identification information of the traffic participant from a second roadside device, wherein the second feature information is used to identify the traffic participant, and the second local identification information indicates a second local identifier of the traffic participant on the second roadside device; and
sending second global identification information to the second roadside device based on the second feature information, wherein the second global identification information indicates the global identifier, and the global identifier corresponds to the second local identifier.

10. An interaction method, applied to a first roadside device and comprising:
obtaining first feature information of a first traffic participant, wherein the first feature information is used to identify the first traffic participant;
obtaining trajectory information of the first traffic participant;
receiving second feature information and first global identification information of a second traffic participant from a second roadside device, wherein the second feature information is used to identify the second traffic participant, the first global identification information indicates a global identifier of the second traffic participant, and the second roadside device is located upstream in a moving direction of the first traffic participant relative to the first roadside device;
comparing the first feature information with the second feature information, to determine that the first traffic participant and the second traffic participant are a same traffic participant; and
sending a trajectory transfer message, wherein the trajectory transfer message comprises the trajectory information and the global identifier.

11. The interaction method according to claim 10, wherein when the first roadside device is located on a road on which the moving trajectory of the first traffic participant is located, the method further comprises:
sending the feature information and second global identification information of the first traffic participant to a third roadside device, wherein the second global identification information indicates the global identifier.

12. The interaction method according to claim 11, wherein the third roadside device is located downstream in a moving direction of the first traffic participant relative to the first roadside device.

13. The interaction method according to claim 11 or 12, wherein the first roadside device is located in a coverage area of a first server, the third roadside device is located in a coverage area of a second server, the first server is different from the second server, and the method further comprises:
receiving an address and topology information of the third roadside device from the first server; and
the sending the feature information and second global identification information of the first traffic participant to a third roadside device comprises:
sending the feature information and the second global identification information of the first traffic participant to the third roadside device based on the address and the topology information of the third roadside device.

14. The interaction method according to claim 10, wherein when the first roadside device is not located on a road on which the moving trajectory of the first traffic participant is located, the method further comprises:
skipping sending the feature information of the first traffic participant and the information indicating the global identifier to any roadside device.

15. An interaction apparatus, applied to a roadside device and comprising:
a processing unit, configured to obtain first feature information of a traffic participant, wherein the first feature information is used to identify the traffic participant;
a sending unit, configured to send the first feature information and first local identification information to a server, wherein the first local identification information indicates a first local identifier of the traffic participant on the first roadside device; and
a receiving unit, configured to receive the first global identification information from the server, wherein the first global identification information indicates a global identifier corresponding to the first local identifier.

16. The interaction apparatus according to claim 15, wherein
the sending unit is further configured to send first trajectory information, wherein the first trajectory information indicates a trajectory of the traffic participant and the global identifier.

17. The interaction apparatus according to claim 16, wherein the first trajectory information further indicates the first local identifier.

18. The interaction apparatus according to any one of claims 15 to 17, wherein the global identifier comprises one or more of the following: a road identifier, a road operator identifier, a server identifier, a sensing network identifier, and the first local identifier.

19. The interaction apparatus according to any one of claims 15 to 18, wherein the first local identifier comprises one or more of the following: a sensing device identifier, a roadside computing unit identifier, an identifier of a pole position in which a roadside device is deployed, and a traffic participant identifier.

20. The interaction apparatus according to any one of claims 15 to 19, wherein
the sending unit is further configured to send the first feature information and second global identification information to a second roadside device, wherein the second global identification information indicates the global identifier, and the second roadside device is located downstream in a moving direction of the traffic participant relative to the roadside device.

21. An interaction apparatus, applied to a server and comprising:
a receiving unit, configured to receive first feature information and first local identification information of a traffic participant from a first roadside device, wherein the first feature information is used to identify the traffic participant, and the first local identification information indicates a first local identifier of the traffic participant on the first roadside device; and
a sending unit, configured to send first global identification information to the first roadside device based on the first feature information, wherein the first global identification information indicates a global identifier corresponding to the first local identifier.

22. The interaction apparatus according to claim 21, wherein the interaction apparatus further comprises:
a storage unit, configured to store a correspondence between the global identifier and the first local identifier.

23. The interaction apparatus according to claim 21 or 22, wherein
the receiving unit is further configured to receive second feature information and second local identification information of the traffic participant from a second roadside device, wherein the second feature information is used to identify the traffic participant, and the second local identification information indicates a second local identifier of the traffic participant on the second roadside device; and
the sending unit is further configured to send second global identification information to the second roadside device based on the second feature information, wherein the second global identification information indicates the global identifier, and the global identifier corresponds to the second local identifier.

24. An interaction apparatus, applied to a roadside device and comprising:
a processing unit, configured to obtain first feature information of a first traffic participant, wherein the first feature information is used to identify the first traffic participant, and
the processing unit is further configured to obtain trajectory information of the first traffic participant;
a receiving unit, configured to receive second feature information and first global identification information of a second traffic participant from a second roadside device, wherein the second feature information is used to identify the second traffic participant, the first global identification information indicates a global identifier of the second traffic participant, and the second roadside device is located upstream in a moving direction of the first traffic participant relative to the roadside device, and
the processing unit is further configured to compare the first feature information with the second feature information, to determine that the first traffic participant and the second traffic participant are a same traffic participant; and
a sending unit, configured to send a trajectory transfer message, wherein the trajectory transfer message comprises the trajectory information and the global identifier.

25. The interaction apparatus according to claim 24, wherein
the sending unit is further configured to: when the roadside device is located on a road on which the moving trajectory of the first traffic participant is located, send the feature information and second global identification information of the first traffic participant to a third roadside device, wherein the second global identification information indicates the global identifier.

26. The interaction apparatus according to claim 25, wherein the third roadside device is located downstream in a moving direction of the first traffic participant relative to the roadside device.

27. The interaction apparatus according to claim 25 or 26, wherein the roadside device is located in a coverage area of a first server, the third roadside device is located in a coverage area of a second server, and the first server is different from the second server;
the receiving unit is further configured to receive an address and topology information of the third roadside device from the first server; and
the sending unit is specifically configured to send the feature information and the second global identification information of the first traffic participant to the third roadside device based on the address and the topology information of the third roadside device.

28. The interaction apparatus according to claim 24, wherein
the sending unit is further configured to: when the roadside device is not located on a road on which the moving trajectory of the first traffic participant is located, skip sending the feature information of the first traffic participant and the information indicating the global identifier to any roadside device.

29. An interaction apparatus, comprising a processor and a memory, wherein the memory is configured to store a computer program, and the processor is configured to execute the computer program, so that the apparatus performs the interaction method according to any one of claims 1 to 14.

30. A computer program product, comprising computer instructions, wherein when the computer instructions are run on a processor, the interaction method according to any one of claims 1 to 14 is implemented.

31. A computer-readable storage medium, wherein the computer-readable medium stores computer instructions, and when the computer instructions are run on a processor, the interaction method according to any one of claims 1 to 14 is implemented.
